(19) Europäisches Patentamt
European Patent Office
Office européen des brevets

(11) **EP 2 331 907 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(21) Anmeldenummer: **09778718.8**

(22) Anmeldetag: **17.09.2009**

(51) Int Cl.:
**G01B 21/04** (2006.01)   **G01B 5/008** (2006.01)

(86) Internationale Anmeldenummer:
**PCT/EP2009/006927**

(87) Internationale Veröffentlichungsnummer:
**WO 2010/037506 (08.04.2010 Gazette 2010/14)**

(54) **VERFAHREN ZUM VERMESSEN EINES WERKSTÜCKS UND KOORDINATENMESSGERÄT**

METHOD FOR MEASURING A WORK PIECE AND COORDINATE MEASURING DEVICE

PROCÉDÉ DE MESURE D'UNE PIÈCE ET APPAREIL DE MESURE DE COORDONNÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.10.2008   DE 102008049751**

(43) Veröffentlichungstag der Anmeldung:
**15.06.2011   Patentblatt 2011/24**

(73) Patentinhaber: **Carl Zeiss Industrielle Messtechnik GmbH
73447 Oberkochen (DE)**

(72) Erfinder:
• **LOTZE, Werner
01309 Dresden (DE)**
• **KUNZMANN, Steffen
01279 Dresden (DE)**
• **HELD, Tobias
86720 Nördlingen (DE)**

(74) Vertreter: **Brunotte, Joachim Wilhelm Eberhard
Patentanwälte Bressel und Partner mbB
Potsdamer Platz 10
10785 Berlin (DE)**

(56) Entgegenhaltungen:
EP-A2- 1 279 918    EP-A2- 1 602 900
DE-A1- 19 518 268    US-A- 3 943 633
US-A- 4 621 434    US-A- 4 882 848
US-A- 5 040 306    US-A- 5 806 201
US-A- 5 966 681    US-A1- 2008 148 588

• LOTZE E W: "HIGH-SPEED SCANNING AUF KOORDINATENMESSGERATEN. NEUE MESSPHILOSOPHIE DURCH MESSENDE TASTER UND NEUE AUSWERTEVERFAHREN", MICROTECNIC, AGIFA VERLAG S.A. ZURICH, CH, Nr. 4, 1. Januar 1993 (1993-01-01), Seiten 4-10, XP000466257, ISSN: 0026-2854
• MIGUEL P C ET AL: "A review on methods for probe performance verification", MEASUREMENT, INSTITUTE OF MEASUREMENT AND CONTROL. LONDON, GB LNKD- DOI:10.1016/S0263-2241(98)00006-2, Bd. 23, Nr. 1, 1. Januar 1998 (1998-01-01) , Seiten 15-33, XP004129957, ISSN: 0263-2241

**Beschreibung**

Die vorliegende Erfindung betrifft ein Verfahren zum Vermessen eines Werkstücks sowie ein entsprechendes Koordinatenmessgerät. Die vorliegende Erfindung betrifft insbesondere das Gebiet der Koordinatenmesstechnik unter Verwendung eines Koordinatenmessgeräts, das einen Sensor mit einem auslenkbaren Taster (insbesondere mit einem Taststift), an dessen freiem Ende ein Tastkörper (in der Regel eine Tastkugel) angeordnet ist, der das zu vermessende Werkstück antastet.

In der Koordinatenmesstechnik werden häufig Sensoren (insbesondere Tastköpfe) verwendet, bei denen ein Taststift in den drei Koordinatenrichtungen eines kartesischen Koordinatensystems beweglich am Sensor befestigt ist.

Dazu weisen bekannte Sensoren in ihrem Inneren eine Mechanik auf, über die der Taststift in den drei Koordinatenrichtungen ausgelenkt werden kann. Die Mechanik weist dazu üblicherweise drei Führungen auf, wobei jede der Führungen die Bewegung in einer der drei Koordinatenrichtungen des Koordinatenmessgerätes zulässt. Dazu ist jede der drei Führungen parallel zu einer der Bewegungsrichtungen des Koordinatenmessgerätes ausgerichtet.

In der Veröffentlichung mit dem Titel "Messende Taster mit mehreren Freiheitsgraden" von Werner Lotze, TR Technische Rundschau, Heft 29/30, 1993, Seiten 20-25 wird ein Modell für die Ableitung des Verhaltens eines messenden Tasters mit drei Freiheitsgraden beschrieben. Gemäß dem Modell weist der Taster drei gekreuzte Federparallelführungen und zugehörige Messwertaufnehmer auf. Die Federführungen sind so ausgestaltet, dass sie in den drei Richtungen jeweils eine lineare Federkennlinie mit einer gegebenen Nachgiebigkeit aufweisen. Alle drei Führungen sind frei beweglich, so dass die am Taststift befestigte Tastkugel in jede Raumrichtung auslenkbar ist. Im Fall der Antastung einer Werkstückfläche können die von der Werkstückfläche auf die Tastkugel ausgeübten Kräfte als ein Messkraftvektor f beschrieben werden, der gleichermaßen den Taststift wie auch das Tastsystem des Tasters auslenkt. Die Auslenkung kann wiederum durch einen Vektor, den Auslenkvektor a, beschrieben werden, welcher gleich der vektoriellen Summe des Verschiebungsvektors der Tastereinspannung und des Verformungsvektors des Taststiftes ist. Das Modell geht von strenger Linearität zwischen Messkraft und Tasterauslenkung einerseits und zwischen Tasterauslenkung und Messsignalen andererseits aus. Der Zusammenhang zwischen dem Verformungsvektor v und dem Kraftvektor f wird durch eine Nachgiebigkeitsmatrix N ausgedrückt, die eine 3 x 3-Matrix ist.

Für das Verständnis dieser Beziehung kann die Auslenkung für den Fall verfolgt werden, dass ein Kraftvektor f mit konstantem Betrag, der auf den Wert 1 normiert werden kann, alle Raumrichtungen durchläuft. Der Vektor f beschreibt dann eine Einheitskugel. Die Gesamtheit aller Auslenkungsvektoren v beschreibt dann ein räumliches Ellipsoid, das das Einfluss- oder Nachgiebigkeitsellipsoid genannt werden kann. Die Richtung von Messkraft f und Verformungsvektor v des Taststiftes fallen nur in den drei Hauptachsenrichtungen dieses Ellipsoids zusammen. Diese Achsrichtungen sind zugleich die drei Eigenvektoren der Nachgiebigkeitsmatrix $N_T$.

Auch die Auslenkung s der Tastereinspannung (bezogen auf den Tastkugelmittelpunkt) kann als Vektorgleichung geschrieben werden, wobei der Auslenkungsvektor s gleich der Nachgiebigkeitsmatrix $N_F$ infolge der Messfedern multipliziert mit dem Messkraftvektor f ist. Die Gesamtauslenkung a als Vektor kann daher als Summe des Auslenkungsvektors s und des Verformungsvektors v des Taststiftes ausgedrückt werden. Dementsprechend kann eine Gesamtnachgiebigkeitsmatrix $N_{ges}$ definiert werden, die gleich der Summe der Nachgiebigkeitsmatrix $N_T$ bezüglich der Verformung des Taststiftes und der Nachgiebigkeitsmatrix $N_F$ infolge der Messfedern ist.

In der zuvor genannten Veröffentlichung und in der Veröffentlichung desselben Verfassers in Microtechnic 4/1993, Fallanden, Schweiz, Seiten 4-10 wird außerdem die Beziehung zwischen dem Auslenkungsvektor s der Tastereinspannung und dem Gesamtauslenkungsvektor a abgeleitet, indem der Vektor a multipliziert mit einer Matrix M, die als elastische Übertragungsmatrix bezeichnet wird, gleich dem Vektor s ist. Als Messgröße eines Tasters stehen primär die drei Ausgangssignale u1, u2, u3 des Tasters bezüglich der drei Koordinatenachsen zur Verfügung. Diese Ausgangssignale können als Vektor u geschrieben werden. Dieser Vektor u ist gleich dem Auslenkungsvektor s der Tastereinspannung multipliziert mit einer Übertragungsmatrix B. Das Produkt dieser Übertragungsmatrix B und der elastischen Übertragungsmatrix M kann invertiert werden, so dass eine so genannte Tastermatrix K erhalten wird. Die neun Koeffizienten dieser Matrix K enthalten sämtliche kinematischen, elastischen und für die Erzeugung der Signale relevanten Eigenschaften des Tasters. Es ist Praxis, diese Koeffizienten durch gesonderte Kalibrierung an einem Kalibriernormal zu ermitteln. Mit Hilfe der Tastermatrix K kann aus den von dem Koordinatenmessgerät gelieferten momentanen Positionsangaben der Tastkugel und aus Messsignalen des Tasters die Position des aktuellen Messpunktes berechnet werden, d.h. die Position des Punktes, an dem die Tastkugel die Werkstückfläche berührt. Bemerkenswert bei dieser Formulierung des Problems ist, dass die Messkraft weder nach Betrag noch nach Richtung auftritt. Sie spielt folglich für den Messvorgang in erster Ordnung keine Rolle. Entsprechendes gilt für die elastischen Eigenschaften und damit für die Nachgiebigkeitsmatrix infolge der Verformung des Taststiftes. Solange dieses Modell korrekt ist, reicht eine Kalibrierung aus, um die Bestimmung der Koordinaten des Messpunktes ohne weitere Berücksichtigung der Nachgiebigkeit und Messkraft zu ermöglichen.

Voraussetzung für das oben beschriebene Modell ist jedoch, dass der Messkraftvektor f durch den Mittelpunkt P der Tastkugel geht. Tatsächlich jedoch greift die Messkraft bezüglich der Tastkugel im Berührungspunkt B auf der Tastkugeloberfläche an und geht dadurch in der Regel in einem Abstand am Mittelpunkt P der Tastkugel vorbei, wodurch sich sowohl die Längen der Hebelarme für die Biegung des gesamten elastischen Systems ändern als auch ein Drehmoment bezogen auf den Mittelpunkt P entsteht. Bei üblichen Tastkugeln mit einem Durchmesser von wenigen Millimetern ist der Fehler bei vielen Messaufgaben vernachlässigbar klein. Es gibt jedoch auch Situationen, in denen der Fehler von Bedeutung ist, insbesondere wenn die Verformung v des Taststiftes groß ist. Nicht immer ist es möglich, dies zu vermeiden, indem z.B. ein entsprechend steifer Taststift verwendet wird.

In der Praxis kommen Taststifte vor, deren Nachgiebigkeit in den drei Koordinatenrichtungen sehr verschieden ist. Z.B. kann die Nachgiebigkeit in einer Richtung zehnmal größer als in einer anderen Richtung sein.

US 5,966,681 offenbart ein Verfahren zur Steuerung von Koordinatenmessgeräten, bei dem ein Tastkopf mit einem daran beweglich befestigten Taster verfahren wird und bei dem der Taster mit einer Messkraft gegenüber dem Tastkopf beaufschlagt wird. Die aufgeschaltete Messkraft setzt sich zusammen aus einer dem Betrag nach konstanten, normal auf die Oberfläche der zu vermessenden Werkstücke gerichteten Sollmesskraft und einer Korrekturmesskraft, die der zumindest teilweisen Kompensation von durch die Beschleunigung des Tasters auftretenden Massenträgheitskräften dient.

Es ist eine Aufgabe der vorliegenden Erfindung, die Genauigkeit bei der Bestimmung von Koordinaten eines Werkstücks durch mechanische Antastung der Werkstückoberfläche mit einem Taster zu steigern.

Zur Lösung der Aufgabe wird vorgeschlagen, die elastischen Eigenschaften des Tasters bei der Kalibrierung und/oder beim Betrieb des Koordinatenmessgeräts zu berücksichtigen. Anders als in dem oben erwähnten, in TR Technische Rundschau, Heft 29/30, 1993, Seiten 20-25 veröffentlichten Aufsatz sollen die elastischen Eigenschaften explizit berücksichtigt werden und nicht lediglich durch Kalibrierung des Tasters für den Messbetrieb eliminiert werden.

Diese Aufgabe wird durch Verfahren mit den Merkmalen der unabhängigen Verfahrensansprüche 1, 6 und 8, sowie durch eine Vorrichtung mit den Merkmalen des unabhängigen Vorrichtungsanspruchs 9 gelöst. Vorteilhafte Weiterbildungen ergeben sich aus den abhängigen Ansprüchen.

Gemäß einem ersten Aspekt der Erfindung, der unabhängig von noch zu beschreibenden weiteren Aspekten ausgeführt werden kann, wird bei Tastern, die zumindest einen rotatorischen Freiheitsgrad der Bewegung (z. B. ein Taster mit einem Tastelement, das über ein Kardangelenk - oder eine ähnliche Mechanik, die eine Rotation um zumindest eine Drehachse ermöglicht - mit dem Arm eines Koordinatenmessgeräts verbunden ist oder ein Taster mit einem an einer Plattform befestigten Taststift, wobei die Plattform über zwei parallele, voneinander beabstandete Blattfedern mit dem Koordinatenmessgerät verbunden ist, wie es in Bild 4 der oben genannten Veröffentlichung in der Technischen Rundschau dargestellt ist) aufweisen, eine Nachgiebigkeit (im Folgenden auch Elastizität genannt) des Tasters berücksichtigt, die sich aus der bei solchen Tastern möglichen elastischen Verschiebung des Gelenks (z. B. Kardangelenks) bezüglich einer Befestigung des Tasters ergibt. Unter einem Kardangelenk wird in dieser Beschreibung allgemein eine Mechanik verstanden, die eine Rotation des Tastelements um zwei zueinander quer verlaufende Drehachsen ermöglicht. Die Verschiebung tritt insbesondere durch die Messkraft auf, d.h. durch das Antasten des Werkstücks durch den Taster. Unter einem Gelenk wird die Mechanik verstanden, die den rotatorischen Freiheitsgrad ermöglicht, z. B. das genannte Kardangelenk oder eine Mechanik, die lediglich ein einziges Drehlager zum Lagern eines um eine Rotationsachse drehbaren Teils aufweist, wobei z. B. an dem drehbaren Teil der Taststift montiert ist.

Die Befestigung des Tasters ist z.B. an einem Arm eines Koordinatenmessgeräts angeordnet, wobei der Arm mindestens einen Freiheitsgrad der Bewegung hat. Die Formulierung "Berücksichtigung der Nachgiebigkeit" schließt die Berücksichtigung der Richtungsabhängigkeit der Nachgiebigkeit ein, d.h. die Tatsache, dass der Taster oder ein Tastkopf, dessen Teil der Taster ist, in unterschiedlichen Richtungen unterschiedlich nachgiebig ist.

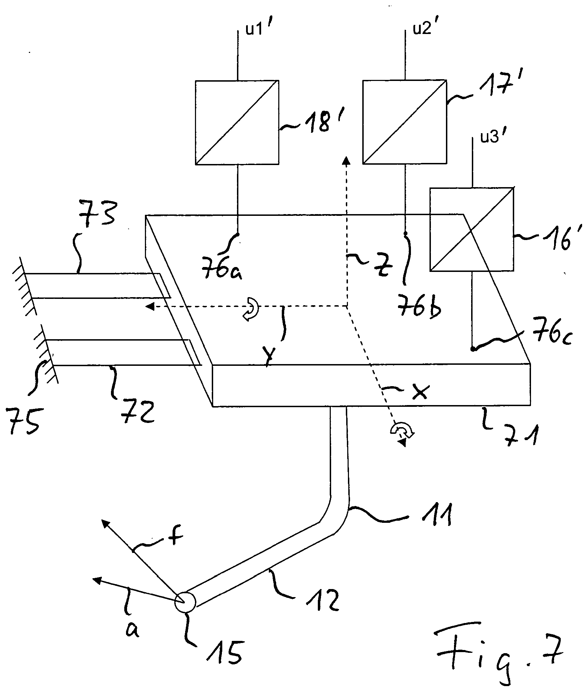

In derselben Weise wie bei Tastern mit Gelenken kann auch bei anderen Tastern, die zumindest einen rotatorischen Freiheitsgrad der Bewegung haben, die Elastizität der Messeinrichtung berücksichtigt werden. Z. B. kann ein Taster bei Einwirkung einer äußeren Kraft elastisch verformbar sein und/oder kann die Bewegung des Tastelements z. B. durch Dehnmessstreifen, gemessen werden. Durch Auswertung der Signale von mehreren Dehnmessstreifen kann auch die rotatorische Bewegung detektiert werden. Die Erfindung ist daher nicht auf die Berücksichtigung der Nachgiebigkeit von Tastern mit Gelenken (zum Beispiel einem Kardangelenk) beschränkt. Vielmehr kann der zumindest eine rotatorische Freiheitsgrad auch aufgrund einer anderen mechanischen Konstruktion bestehen, bei der z. B. mit einer rotatorischen Bewegung auch eine lineare Bewegung gekoppelt sein kann. Dies ist z. B. bei dem Taster der Fall, der noch anhand von Fig. 7 beschrieben wird oder bei dem Taster SP25 der Renishaw plc, New Mills, Wotton-under-Edge, Gloucestershire, GL12 8JR, United Kingdom.

Vorzugsweise wird die Elastizität in allen Fällen unter Verwendung von Nachgiebigkeitsmatrizen berücksichtigt.

Gemäß einem zweiten Aspekt der Erfindung, der einzeln oder in Kombination mit einem oder mehreren der anderen Aspekte der Erfindung realisiert werden kann, wird die Elastizität, insbesondere die Nachgiebigkeitsmatrix, des Tasters unter Verwendung eines physikalischen Modells und/oder durch Experimente bestimmt. Vorzugsweise wird die Nachgiebigkeitsmatrix später bei der Vermessung eines Werkstücks mit Hilfe des Tasters für die Planung und/oder Steuerung der Vermessung verwendet. Insbesondere wird unter Verwendung der durch das Modell berechneten Elastizität und/oder der durch Experimente bestimmten Elastizität eine Richtung und/oder Kraft vorgegeben, mit der der Taster das Werkstück an dessen Oberfläche antastet.

Wenn in dieser Beschreibung oder in den Patentansprüchen von der Nachgiebigkeitsmatrix als Beschreibung der richtungsabhängigen Elastizität eines Tasters oder einer anderen Koordinatenmesseinrichtung die Rede ist, schließt dies auch den Fall mit ein, dass andere, äquivalente Formulierungen der Nachgiebigkeitsmatrix verwendet werden oder bestimmt werden, z.B. das Nachgiebigkeitsellipsoid (siehe oben), die Inverse der Nachgiebigkeitsmatrix, auch Streifigkeitsmatrix genannt, oder eine andere Formulierung. Insbesondere kann vor einer Kalibrierung des Tasters die Nachgiebigkeitsmatrix bereits bekannt (oder zumindest einzelne Elemente der Matrix können bekannt sein oder es können Schätzwerte für die Elemente oder die Matrix vorliegen oder ermittelt werden) sein, um die Kalibrierung präziser durchzuführen. Ein Beispiel für die eigentliche Kalibrierung eines Tasters ist in der WO 2004/106854 A1 beschrieben, auf die hiermit voll inhaltlich Bezug genommen wird. Dabei kann die vor der Kalibrierung bekannte Nachgiebigkeitsmatrix durch die Kalibrierung verbessert werden, d.h. zur Bestimmung der Nachgiebigkeitsmatrix wird iterativ vorgegangen. Dabei können weitere Iterationen durchgeführt werden, d.h. nach einer erstmaligen Verbesserung der Nachgiebigkeitsmatrix durch eine Kalibrierung kann eine erneute Kalibrierung vorgenommen werden, durch die die Nachgiebigkeitsmatrix erneut verbessert wird. Weitere solche Iterationsschritte sind möglich.

Die Nachgiebigkeitsmatrix kann daher ausschließlich dazu dienen, die Kalibrierung zu verbessern. Die Nachgiebigkeitsmatrix kann jedoch alternativ oder zusätzlich unmittelbar für die Planung und/oder Steuerung der Vermessung eines Werkstücks verwendet werden. Beispiele hierzu werden noch näher beschrieben. Dabei ergeben sich Beispiele auch aus anderen Aspekten der Erfindung, die unabhängig von diesem zweiten Aspekt der Erfindung realisiert werden können.

Zum Erleichtern des Verständnisses der Erfindung wird folgendes, nicht-beanspruchtes Beispiel offenbart: ein Verfahren zum Bestimmen einer richtungsabhängigen Nachgiebigkeit eines Tasters, der ausgestaltet ist, zur Bestimmung von Koordinaten von Oberflächenpunkten eines Werkstücks die Oberfläche mechanisch anzutasten, insbesondere zum Bestimmen einer richtungsabhängigen Nachgiebigkeit eines Tasters mit zumindest einem rotatorischen Freiheitsgrad der Bewegung beim Antasten der Oberfläche, wobei

- eine Mehrzahl von Oberflächenpunkten eines Werkstücks von dem Taster angetastet wird und für jeden der Oberflächenpunkte eine Auslenkung a des Tasters auf Grund einer während der Antastung wirkenden Antastkraft erfasst wird,
- Elemente einer Nachgiebigkeitsmatrix $N_{ges}$, die die richtungsabhängige Nachgiebigkeit beschreibt, unter Berücksichtigung der für jeden der angetasteten Oberflächenpunkte geltenden Vektorgleichung

$$\mathbf{a} = \mathbf{N}_{ges}\mathbf{f}$$

berechnet wird, wobei f die auf den Taster von dem Oberflächenpunkt ausgeübte Gegenkraft der Antastkraft ist.

Insbesondere können alle Elemente der Nachgiebigkeitsmatrix bestimmt werden. Bei einer bevorzugten Ausführungsform wird eine Vielzahl der Oberflächenpunkte angetastet, ein überbestimmtes Gleichungssystem aufgestellt wird, das die oben genannten Vektorgleichung für jeden Oberflächenpunkte enthält, und das Gleichungssystem gelöst wird. Zum Beispiel können mit Methoden der Ausgleichsrechnung (Best Fit) die Elemente der Nachgiebigkeitsmatrix aus dem Gleichungssystem bestimmt werden.

Bei dem Verfahren kann zumindest für einen Teil der angetasteten Oberflächenpunkte durch Versuche ermittelt werden, in welcher Richtung der Auslenkungsvektor des Tastelements bei senkrecht zur Oberfläche stehender Antastkraft orientiert ist. Diese Richtung ist die Richtung der Mittelachse des so genannten Reibkegels. Z. B. kann bei den Versuchen ausgehend von einem Zustand, in dem das Tastelement die Oberfläche mit einer Antastkraft antastet, die Auslenkungsrichtung verändert werden, indem das Koordinatenmessgerät den Taster bewegt, bis es zu einem Abrutschen des Tastelements an der Oberfläche kommt, d.h. das Tastelement die Oberfläche nicht mehr an derselben Stelle berührt.

Bei der Berechnung der Elemente der Nachgiebigkeitsmatrix (insbesondere über das oben erwähnte Gleichungssystem) kann die so bestimmte Richtung der Mittelachse des Reibkegels als Richtung des Auslenkungsvektors berücksichtigt werden und kann insbesondere auch die Antastung des jeweiligen Oberflächenpunktes mit dieser Richtung des Auslenkungsvektors erfolgen.

Insbesondere kann die Nachgiebigkeitsmatrix aus den gleichen Messpunkten berechnet werden, die für die Sensorkalibrierung angetastet werden müssen. Ein Beispiel hierzu wird auch in der Figurenbeschreibung beschrieben.

Wenn die Nachgiebigkeitsmatrix durch Experimente bestimmt wurde, dürfen sich vorzugsweise keine erheblichen Unterschiede zu der Nachgiebigkeitsmatrix ergeben, die für die Durchführung der Experimente, insbesondere für die Kalibrierung des Tasters, verwendet wurde. Bevorzugtermaßen wird ein Grenzwert vorgegeben. Weichen Elemente und/oder Kriterien, die aus Elementen der Nachgiebigkeitsmatrix vor und nach den Experimenten berechnet wurden, um einen Wert voneinander ab, der größer ist als der Grenzwert, kann die Kalibrierung verworfen werden, wiederholt werden (insbesondere ein weiterer Iterationsschritt, wie oben erwähnt, durchgeführt werden) und/oder die Kalibrierung lediglich unter Vorbehalt für die Vermessung eines Werkstücks verwendet werden.

Der folgende Gedanke ist unabhängig von der Art der Bestimmung der Nachgiebigkeitsmatrix. Jedoch kann zunächst in einer der beschriebenen Weisen die Nachgiebigkeitsmatrix bestimmt werden und dann eine Kalibrierung eines Tasters durchgeführt werden, oder Informationen für die Kalibrierung und die Bestimmung der Nachgiebigkeitsmatrix können zumindest teilweise in gemeinsamen Experimenten (insbesondere durch Antasten eines Werkstücks, z. B. eines Kalibrierobjekts, mit dem Taster) gewonnen werden.

Bei der Kalibrierung eines Sensors (Tasters) können die Kalibrierpunkte im Scanningverfahren aufgenommen werden, d.h. das Tastelement des Tasters wird an der Oberfläche des Kalibrierobjekts entlang geführt, während das Tastelement eine Antastkraft auf die Oberfläche ausübt. Dabei wird das Tastelement vorzugsweise bei konstanter Soll-Antastkraft auf demselben Weg an der Oberfläche des Kalibrierobjekts hin- und zurückbewegt, da sich andernfalls systematische Fehler beim Bestimmen der Nachgiebigkeitsmatrix ergeben können und in den meisten Fällen auch ergeben.

Wenn nicht im Scanningverfahren kalibriert wird, kann durch Variation der Soll-Antastrichtung des Tastelements für jeden angetasteten Oberflächenpunkt des Kalibrierobjekts Information gesammelt werden, die systematische Fehler bei der Bestimmung der Nachgiebigkeitsmatrix eliminiert.

Gemäß einem dritten Aspekt der Erfindung, der einzeln oder in beliebiger Kombination mit den anderen Aspekten ausgeführt werden kann, wird bei der Steuerung und/oder Regelung eines Antastvorganges (d.h. eines Vorganges, bei dem ein Tastelement eines Tasters eine Werkstückoberfläche zum Zweck der Vermessung des Werkstücks antastet) unmittelbar die Antastkraft als Steuer- bzw. Regelgröße verwendet. Bisher war es üblich, die Sollkraft lediglich indirekt über die Auslenkung des Tastelements bezüglich einer Befestigung des Tastelements zu steuern und/oder zu regeln. Der Anwender, d.h. der Betreiber eines Koordinatenmessgeräts, gibt jedoch in vielen Fällen eine Antastkraft vor und nicht die Auslenkung. Bisher war es ebenfalls üblich, den Betrag der Antastkraft vorzugeben und die Kraft senkrecht zur Oberfläche des Werkstücks an dem Antastpunkt aufzubringen. Wegen den oben erwähnten nicht isotropen elastischen Eigenschaften von Tastern kann es dabei aber zum Wegrutschen bzw. Durchrutschen des Tastelements an der Oberfläche des Werkstücks kommen. Wenn eine Werkstückoberfläche im Scanningverfahren abgetastet wird, kann es zu erheblichen Abweichungen von dem Weg kommen, der beim Scanning an der Oberfläche des Werkstücks tatsächlich abgetastet wird, im Vergleich zu dem Weg, der abgetastet werden soll. Insbesondere wenn der Scanningweg in einer Sollebene liegt, kann dies nachteilig sein.

Die Verwendung der Nachgiebigkeitsmatrix ermöglicht die unmittelbare Steuerung und/oder Regelung der Antastkraft hinsichtlich Betrag und Richtung. Insbesondere kann geprüft werden, ob es beim Aufbringen einer Soll-Antastkraft zum Durchrutschen des Tastelements kommen kann. Wenn dies der Fall ist, kann die Steuerung und/oder Regelung automatisch eine andere Kraft wählen und/oder eine Nachricht an den Betreiber ausgeben.

Alternativ oder zusätzlich kann, wie noch bezüglich dem vierten Aspekt der Erfindung näher beschrieben wird, die Orientierung des Nachgiebigkeitsellipsoids des Tasters relativ zu dem Werkstück verändert werden, insbesondere so verändert werden, dass es sich bei demselben Betrag der Messkraft oder sogar bei derselben Messkraft (bezüglich Betrag und Richtung) nicht zu einem Durchrutschen des Tastelements an der Werkstückoberfläche kommt. Z.B. bei einem Taster mit einem Kardangelenk und/oder bei einem Taster mit einem oder mehreren rotatorischen Freiheitsgraden, wie z.B. einem Taster, der an einem Dreh-/Schwenkgelenk aufgehängt ist, kann durch geeignete Einstellung der Aufhängung des Tasters der genannte gewünschte Effekt erzielt werden.

Alternativ zu der direkten Verwendung der Antastkraft in der Steuerung und/oder Regelung kann weiterhin die Auslenkung zur Steuerung und/oder Regelung verwendet werden, wobei jedoch unter Verwendung der Nachgiebigkeitsmatrix Grenzen für die Ausrichtung des Tasters bezüglich der Werkstückoberfläche und/oder Grenzen für den Betrag der Antastkraft berechnet werden.

Insbesondere ist es möglich, dass die Steuerung und/oder Regelung, die die Auslenkung verwendet, die Nachgiebigkeitsmatrix oder zumindest Elemente davon mit der Soll-Auslenkung verrechnet. Allerdings wird die Verwendung der Auslenkung für die Steuerung und/oder Regelung als Steuer-/Regelgröße nicht bevorzugt, obwohl sich z.B. die oben genannten Probleme (Wegrutschen) beim Scanning damit ebenfalls lösen lassen.

Ein weiterer, vierter Aspekt der Erfindung, der allein oder in beliebige Kombination mit einem der anderen Aspekte realisiert werden kann, wird im Folgenden beschrieben.

Insbesondere in beiden Fällen der Regelung bzw. Steuerung (Messkraft oder Auslenkung als Steuer-/Regelgröße) wird eine bevorzugte Vorgehensweise beim Antasten einer Werkstück-Oberfläche möglich. Wie oben erwähnt, erwarten Anwender häufig, dass die Messkraft senkrecht zur Oberfläche des Werkstücks aufgebracht wird. Für den Anwender wäre es daher überraschend, wenn für ihn deutlich erkennbar das Tastelement nicht senkrecht zur Oberfläche an die Werkstückoberfläche herangefahren wird, sondern z.B. auf einem Bogen. Das senkrechte Anfahren der Oberfläche ist häufig zwingend vorgegeben, weil die Vermessung des Werkstücks mit Hilfe eines Modells des Werkstücks (zum Beispiel eines CAD-Modells) voraus geplant wird und an die Steuerung des KMG übergeben wird.

Um dennoch die Messkraft in der mit Hilfe der Nachgiebigkeitsmatrix berechneten optimalen Richtung auf die Werkstückoberfläche aufbringen zu können (und darüber hinaus selbstverständlich an dem gewünschten Ort auf der Werkstückoberfläche aufbringen zu können), wird vorgeschlagen, das Tastelement zunächst senkrecht zur Oberfläche an den gewünschten Antastpunkt heranzufahren und diesen ersten Antastweg an einem Punkt in einem Abstand zur Werkstückoberfläche zu beenden oder alternativ den gewünschten Antastpunkt anzufahren, so dass das Tastelement in Kontakt zu dem Antastpunkt gelangt, jedoch dann die Richtung für den weiteren verbleibenden Weg bis zum Erreichen der Werkstückoberfläche durch das Antastelement zu ändern, und zwar in Richtung der gewünschten Auslenkungsrichtung, oder (wenn das Tastelement die Werkstückoberfläche durch das senkrechte Anfahren bereits erreicht hat) das Antastelement in Richtung der gewünschten Auslenkungsrichtung auszulenken. Insbesondere wird die Antastkraft dadurch (nahezu) senkrecht zur Oberfläche aufgebracht.

Insbesondere wird ein Verfahren zum Vermessen eines Werkstücks vorgeschlagen, wobei zumindest ein Punkt einer Oberfläche des Werkstücks von einem Taster eines Tastkopfes angetastet wird, wobei der Taster eine Antastkraft auf die Oberfläche ausübt und der Taster relativ zu einer Befestigung des Tastkopfes ausgelenkt wird. Aufgrund der Auslenkung wird eine Position des Punktes der Oberfläche bestimmt wird. Eine Richtungsabhängigkeit einer Nachgiebigkeit des Tasters und/oder des Tastkopfes wird ermittelt und/oder ist bekannt. Unter Verwendung der Richtungsabhängigkeit wird eine Auslenkungsrichtung berechnet, in der der Taster beim Antasten der Oberfläche ausgelenkt wird, während er die Antastkraft auf das Werkstück ausübt. Der Taster wird zunächst senkrecht zur Oberfläche an die Oberfläche heranbewegt und danach wird der Taster in einer Richtung, die der Auslenkungsrichtung entgegengesetzt ist, bis zu der Oberfläche bewegt oder - wenn der Taster bereits senkrecht bis zu der Oberfläche heran bewegt wurde - wird der Taster in der Auslenkungsrichtung ausgelenkt.

Bevorzugtermaßen wird die Auslenkungsrichtung so berechnet, dass die Antastkraft senkrecht zu der Oberfläche steht. Dabei ist allerdings zu berücksichtigen, dass die Berechnung im Voraus nur bezüglich eines Soll-Antastpunktes möglich ist. Daher kann der Antastpunkt tatsächlich mit einer nicht exakt senkrecht stehenden Antastkraft angetastet werden, insbesondere wenn die Oberflächennormale anders ausgerichtet ist, als es der Sollzustand vorgibt.

Gemäß einem fünften Aspekt der vorliegenden Erfindung, der unabhängig von den anderen Aspekten der Erfindung oder in beliebiger Kombination mit den anderen Aspekten der Erfindung realisiert werden kann, wird vorgeschlagen, das Nachgiebigkeitsellipsoid des Tasters unter Berücksichtigung der elastischen Eigenschaften des Tasters in Bezug auf das anzutastende Werkstück einzustellen. Unter "einstellen" wird verstanden, dass das Werkstück und der Taster so relativ zueinander positioniert und ausgerichtet werden, dass beim Antasten der Werkstückoberfläche durch das Tastelement die gewünschte Orientierung des Nachtgiebigkeitsellispoids entsteht.

Zur Einstellung gibt es grundsätzlich zwei Möglichkeiten, die beide allein oder in Kombination miteinander realisiert werden können. Zum einen kann zur Einstellung des Nachgiebigkeitsellipsoids das Werkstück hinsichtlich seiner Position und/oder Orientierung im Raum eingestellt werden, z.B. durch Einstellen eines verschwenkbaren Halters des Werkstücks und/oder eines Drehtischs, auf dem das Werkstück positioniert ist. Zum anderen kann der Taster eingestellt werden, insbesondere durch Verändern der Ausrichtung eines Taststifts, an dessen freiem Ende sich das Tastelement befindet, und/oder durch Einstellen der Position und/oder Ausrichtung eines Kardangelenks mit nicht isotropen elastischen Eigenschaften, an dem das Tastelement angebracht ist, und/oder durch Einstellen eines Dreh-/Schwenkgelenks, an dem das Tastelement angebracht ist. Selbstverständlich gilt entsprechendes für jegliche andere Mechanik, die eine Einstellung der Position und/oder Orientierung des Tastelements bezüglich des Werkstücks erlaubt.

Vorzugsweise wird das Nachgiebigkeitsellipsoid so eingestellt, dass die Antastkraft bezüglich ihrer Richtung nicht mit der Richtung der steifsten Hauptachse des Nachgiebigkeitsellipsoids zusammenfällt. Wäre dies nämlich der Fall, ist es am wahrscheinlichsten, dass es zu einem Durchrutschen des Tastelements kommt. Zwar würde es nicht zu einem Durchrutschen kommen, wenn die steifste Hauptachse beim Antasten genau mit der Richtung der Antastkraft zusammenfällt. Jedoch handelt es sich dabei um einen labilen Gleichgewichtszustand. Sobald die Richtung der Antastkraft geringfügig von der Richtung der steifsten Hauptachse abweicht, kommt es zum Abrutschen des Tasters.

Z.B. wird die Richtung der Antastkraft daher so eingestellt, dass sie mit einer anderen Hauptachse, vorzugsweise der am wenigsten steifen Hauptachse, d.h. der elastischsten Hauptachse des Nachgiebigkeitsellipsoids des Tasters, zusammenfällt. In diesem Fall ist ein Durchrutschen nahezu ausgeschlossen. Insbesondere beim Scannen ist dies besonders vorteilhaft, wie noch erläutert wird (Stick-Slip-Effekte).

Insbesondere wird ein Verfahren zum Vermessen eines Werkstücks vorgeschlagen, wobei zumindest ein Punkt einer Oberfläche des Werkstücks von einem Taster eines Tastkopfes angetastet wird. Der Taster übt eine Antastkraft auf die Oberfläche aus und der Taster wird relativ zu einer Befestigung des Tastkopfes ausgelenkt. Aufgrund der Auslenkung wird eine Position des Punktes der Oberfläche bestimmt. Dabei kann die Auslenkung gemessen werden und/oder kann die Auslenkung (wie es bei Tastköpfen vom so genannten schaltenden Typ der Fall ist) zur Erzeugung eines Signals führen, das die Bestimmung der Koordinaten des Punktes auslöst. Die Auslenkung des Tasters kann verschiedener Art sein. Grundsätzlich kommen alle Arten von Auslenkungen in Frage, die bei Tastköpfen für Koordinatenmessgeräte möglich sind. Häufig wird die Auslenkung wie eingangs beschrieben mittels mehrerer Linearführungen in den verschiedenen Koordinatenachsen des Tasters bewirkt und gemessen. Es ist jedoch eine Auslenkung als Verschwenkung des Tasters um eine Drehachse oder mehrere Drehachsen möglich. Bei der Auslenkung können bestimmte Freiheitsgrade der Bewegung (rotatorische oder lineare Freiheitsgrade) blockiert sein. Gemäß dem hier beschriebenen Vorschlag wird eine Richtungsabhängigkeit einer Elastizität des Tasters und/oder des Tastkopfes ermittelt und/oder ist die Richtungsabhängigkeit bekannt. Der Taster und das Werkstück werden derart unter Berücksichtigung der Richtungsabhängigkeit relativ zueinander positioniert und/oder ausgerichtet, dass es beim Antasten des Punktes der Oberfläche nicht oder mit geringer Wahrscheinlichkeit zu einem unbeabsichtigten Abrutschen des Tasters an der Oberfläche oder nicht oder mit geringer Wahrscheinlichkeit zu einem unbeabsichtigten Abweichen des Tasters von einem beabsichtigten Weg auf der Oberfläche kommt.

Bezüglich der Richtungsabhängigkeit der Elastizität wird insbesondere auf die bereits beschriebenen und noch zu beschreibenden Möglichkeiten der Formulierung der Richtungsabhängigkeit verwiesen. Insbesondere können Elemente einer Nachgiebigkeitsmatrix des Tasters und/oder des Tastkopfes bestimmt werden oder bekannt sein.

Die Positionierung und/oder Ausrichtung des Tasters und des Werkstücks relativ zueinander schließen ein, dass entweder der Taster oder das Werkstück fest positioniert und/oder ausgerichtet sind, so dass jeweils lediglich der andere Gegenstand (d.h. das Werkstück oder der Taster) hinsichtlich ihrer Position und/oder Ausrichtung verändert werden können. Es ist jedoch auch möglich, beide Gegenstände zu bewegen, um die gewünschte Ausrichtung und/oder Position zu erreichen.

Auf das unbeabsichtigte Abrutschen (auch als Durchrutschen zu bezeichnen) und das unbeabsichtigte Abweichen des Tasters von einem beabsichtigten Weg wurde bereits eingegangen. Das Verfahren ist sowohl für das Vermessen eines Werkstücks durch einzelnes, separates Antasten von Oberflächenpunkten als auch für Scanningverfahren geeignet.

Insbesondere bei Verwendung von Tastern im Scanningbetrieb werden oftmals so genannte Stick-Slip-Effekte beobachtet, d. h. das mit der Antastkraft an die Oberfläche des abzutastenden Werkstücks angreifende Tastelement bleibt wiederholt kurzzeitig an der Oberfläche des Werkstücks hängen bzw. "kleben", gefolgt von einem Zeitintervall, in dem das Tastelement der geplanten Scanningbahn mit entsprechend höherer Geschwindigkeit folgt. Diese Stick-Slip-Zeitintervalle wechseln häufig mit hoher Frequenz ab. Dies kann auch als Rattern bezeichnet werden. Verstärkt werden Stick-Slip-Effekte durch raue Oberflächen und durch Anregung von Schwingungen durch das Koordinatenmessgerät und/oder Teile des Tasters.

In einer "Stick"-Phase, in der das Tastelemente an der Oberfläche haftet bzw. hängen bleibt, befindet sich der Antastkraftvektor innerhalb des Reibkegel in der anschließenden "Slip"-Phase verlässt der Kraftvektor den Reibkegel, d. h. seine Richtung ist stärker gegen die Mittelachse des Reibkegels geneigt als die Neigung der Reibkegelgrenzlinien.

Gemäß einer Grundidee der vorliegenden Erfindung können unter Berücksichtigung der Richtungsabhängigkeit der Nachgiebigkeitsmatrix die Ausrichtung des Nachgiebigkeitsellipsoids und die Oberflächennormale der angetasteten Werkstückoberfläche relativ zueinander so eingestellt werden, dass der Antastkraftvektor den Reibkegel nicht oder mit geringerer Wahrscheinlichkeit wiederholt verlässt und wieder erreicht. Dabei ist zu berücksichtigen, dass während des Scanning der Reibkegel sowohl hinsichtlich seiner Orientierung als auch seines Reibkegel-Öffnungswinkels unter Umständen starken Veränderungen unterworfen ist. Ursache für diese Änderungen sind die Ortsabhängigkeit des Haftreibungskoeffizienten und die Änderung der Ausrichtung der Werkstückoberfläche relativ zu dem Taster, die zumindest bei nichtebenen Oberflächen in der Regel auftritt.

Insbesondere ist es möglich, hinsichtlich des Auftretens von "Stick"-Effekten ungünstige Ausrichtungen des Tasters im Vorhinein und/oder während des Scanning zu erkennen. Insbesondere wenn der Taster oder das Werkstück gedreht werden können, können solche "Stick"-Effekte zumindest teilweise vermieden werden.

Z. B. wenn beim Scanning das Nachgiebigkeitsellipsoid so orientiert ist, dass der Antastkraftvektor in Richtung der kürzesten (d. h. der steifsten) Achse des Nachgiebigkeitsellipsoids verläuft, ist ein ungünstiger Betriebszustand gegeben, bei dem es häufig und/oder zu besonders starken "Stick"-Effekten kommt.

Häufig ist das Tastelement des Tasters an einem langgestreckten Element, dem Taststift-Schaft befestigt. Meist ist zumindest der Teil des Schaftes, an dem das Tastelement unmittelbar befestigt ist, gerade, d. h. weist eine Längsachse auf, die in gerader Richtung auf das Tastelement zu verläuft. Wenn das Tastelement beim Scanning derart über die Werkstückoberfläche gezogen wird, dass die für die Aufrechterhaltung der Scanningbewegung verantwortliche Kraftkomponente zumindest teilweise in der Längsrichtung des Schaftes von dem Tastelement weg verläuft, sind "Stick"-Phasen weniger wahrscheinlich von kürzerer Dauer und/oder wird weniger stark von der mittleren Scanninggeschwindigkeit abgewichen. Dieser Zustand wird als "Ziehen" des Tasters bezeichnet. Der umgekehrte Zustand, bei dem die für die Aufrechterhaltung der Scanningbewegung verantwortliche Kraftkomponente, die das Koordinatenmessgerät auf das Tastelement ausübt, kann als "Schieben" bezeichnet werden. Beim Schieben verläuft die Kraftkomponente in Längsrichtung des Schaftes auf das Tastelement zu. Beim Ziehen des Tasters nimmt die Steifigkeit des Tasters in zur Oberfläche des Werkstücks tangentialer Richtung bis zu dem Punkt zu, an dem der Kraftvektor den Reibkegel verlässt. Im Idealfall bleibt der Kraftvektor anschließend dauerhaft außerhalb des Reibkegels, d. h. es kommt nicht zu "Stick"-Phasen, in denen das Tastelement an der Oberfläche hängen bleibt. Beim Schieben des Tasters hingegen nimmt die Steifigkeit des Sensors in tangentialer Richtung ab. In der unmittelbar darauf folgenden Phase legt das Tastelement an der Oberfläche in kurzer Zeit einen verhältnismäßig großen Weg zurück, so dass der Antastkraftvektor wieder in den Reibkegel fällt und es zum Hängenbleiben kommt.

Zwar ist es erfahrenen Anwendern von Tastern bekannt, dass das Ziehen dem Schieben von Tastern vorzuziehen ist, jedoch steht ihnen kein objektives Kriterium zur Verfügung, wie die Neigung des Schaftes zur Oberflächennormalen einzustellen ist.

Z. B. kann daher eine Grenze für das Steifigkeitsverhältnis (d. h. das Verhältnis der Steifigkeit in einer ersten Richtung und einer senkrecht dazu verlaufenden zweiten Richtung) vorgegeben sein. Wird die vorgegebene Grenze überschritten, wird unter Verwendung von Informationen über die Richtungsabhängigkeit der Nachgiebigkeit des Tasters (insbesondere unter Verwendung der Nachgiebigkeitsmatrix) berechnet, wie das Nachgiebigkeitsellipsoid relativ zur Oberfläche des Werkstücks beim Scanning auszurichten ist.

Z. B. kann ein Raumwinkelbereich um die steifste Achse des Nachgiebigkeitsellipsoids definiert werden (z. B. enthält der Raumwinkelbereich sämtliche Richtungen, die um weniger als einen vorgegebenen Winkelbetrag von z. B. 20° von der steifsten Achse abweichen). Das Scanning kann von der Steuerung des Koordinatenmessgeräts automatisch so geplant und/oder durchgeführt werden, dass dieser Raumwinkelbereich (zumindest bezüglich des Sollzustandes des Werkstücks, der Istzustand ist ja in der Regel noch nicht bekannt) von dem Antastkraftvektor nicht erreicht wird. Bei der Berechnung kann davon ausgegangen werden, dass die Oberfläche des Werkstücks ideal glatt ist. Zumindest wird daher bei realen Werkstücken dennoch die Anzahl der "Stick"-Phasen reduziert.

Die zuvor genannten Überlegungen können auch auf Situationen übertragen werden, in denen weder das Werkstück noch der Taster gedreht werden können, um das Nachgiebigkeitsellipsoid relativ zur Oberfläche auszurichten. In diesem Fall kann die Planung und/oder Steuerung des Scanning einen Grenzwert der Scanninggeschwindigkeit (d. h. des Betrages der Geschwindigkeit) aufweisen, der nicht überschritten werden darf. Dabei kann der Grenzwert während des Scanningvorgangs variieren, je nach den Verhältnissen, die auf der Oberfläche des Werkstücks erwartet werden. Unter der Scanninggeschwindigkeit wird die Relativgeschwindigkeit des Tastelements und der Oberfläche des Werkstücks verstanden. Wenn die Berücksichtigung der Nachgiebigkeitsmatrix auf die Planung beschränkt ist, kann der Grenzwert für die Scanninggeschwindigkeit lediglich z. B. als Vorschlag für den Anwender berechnet werden und ausgegeben werden.

Da der Istzustand des Werkstücks in der Regel vor dem Scanning nicht bekannt ist, kann der hinsichtlich "Slip-Stick"-Effekts ungünstige Einfluss von rauen Oberflächen durch einen effektiven, über die Oberfläche gemittelten Haftreibungskoeffizienten berücksichtigt werden. Einem solchen effektiven Koeffizienten entspricht ein Reibkegel mit entsprechendem Kegelwinkel.

Während des Scanning kann (durch Auswertung der zeitlichen Schwankung der Messgebersignale des Tasters und/oder durch einen zusätzlichen, von den Messfunktionen unabhängigen Sensor, der ein Rattern feststellt) erkannt werden, ob und/oder wann es zu Stick-Slip-Effekten kommt. Abhängig davon, ob ein vordefiniertes Kriterium erfüllt ist (z. B. die Frequenz der Slip-Stick-Wechsel einen vorgegebenen Frequenzgrenzwert erreicht oder überschreitet) können Maßnahmen ergriffen werden, z. B. eine Warnung ausgegeben werden, die Geschwindigkeit reduziert werden oder eine Geschwindigkeitsreduktion empfohlen werden und/oder ein anderer Ausrichtungswinkel des Nachgiebigkeitsellipsoids gewählt werden.

Ganz generell gilt für die vorliegende Erfindung, dass sie mit besonderem Vorteil bei so genannten passiven Sensoren oder passiven Tastern eingesetzt werden kann, also bei Tastern, die keine Messwertgeber aufweisen, welche die beim Antasten wirkende Kraft direkt messen. Passive Sensoren enthalten vielmehr Messwertgeber, die die Auslenkung messen und es nur indirekt, z. B. über bekannte Federkonstanten bei der elastischen Auslenkung, ermöglichen, die Kraft zu berechnen.

Zusammenfassend kann festgestellt werden, dass unter Verwendung der Nachgiebigkeitsmatrix folgende zusätzliche Maßnahmen ergriffen werden können:

a) Aus den auftretenden Stick-Slip-Effekten oder bei der Planung eines Scanningvorgangs kann der Öffnungswinkel des Reibungskegels im Kraftvektorraum berechnet werden.

b) Insbesondere können während des Scanning Signale von Messwertgebern des Tasters oder daraus abgeleitete Daten gefiltert werden. Z. B. werden für jeden Messpunkt während des Scanningvorgangs die Kräfte gespeichert, die mit Hilfe der Nachgiebigkeitsmatrix aus den Auslenkungen berechnet wurden. Jeder Messpunkt, bei dem die Neigung der Antastkraft zur Oberfläche dem berechneten Reibkegelwinkel gemäß einem vordefinierten Kriterium zu nahe kommt, wird als ungültig markiert. Wenn die Zahl der als ungültig markierten Messpunkte zu groß wird, können Maßnahmen ergriffen werden, wie z. B. Reduktion der Geschwindigkeit oder Ausgabe einer Warnung.

c) Wenn der Taster und/oder das Werkstück gedreht werden können oder durch Linearverschiebung zumindest des Werkstück oder der Tasteraufhängung die relative Ausrichtung von Werkstück und Taster eingestellt werden kann, kann das Nachgiebigkeitsellipsoid des Tasters in geeigneter Weise zu der Werkstückoberfläche ausgerichtet werden.

d) Z. B. kann der mit Hilfe der Nachgiebigkeitsmatrix gewonnene Reibkegel gespeichert und/oder zunächst mit anderen Parametern der Messung kombiniert und dann gespeichert werden. Bei einem späteren Scanning kann auf die gespeicherte Information zurückgegriffen werden.

Statt von der Nachgiebigkeit kann auch von der Elastizität gesprochen werden. In beiden Fällen ist darunter zu verstehen, dass eine reversible Verformung und/oder Auslenkung auftritt, wenn eine Kraft auf den Taster und/oder Tastkopf ausgeübt wird, wie es im Fall der Antastung eines Oberflächenpunktes aufgrund der Gegenkraft der Fall ist. Je größer die Elastizität oder Nachgiebigkeit ist, desto stärker ist die Verformung und/oder Auslenkung bei gegebener Kraft.

Insbesondere kann unter Berücksichtigung der Richtungsabhängigkeit der Nachgiebigkeit das Werkstück gedreht werden. Z.B. ist es üblich, bei Koordinatenmessgeräten Drehtische zu verwenden, auf denen das zu vermessende Werkstück angeordnet ist. Durch Drehen des Drehtischs mit dem Werkstück kann die Oberflächennormale durch einen Messpunkt an der Oberfläche des Werkstücks anders ausgerichtet werden und im Allgemeinen auch anders positioniert werden.

Alternativ oder zusätzlich wird vorgeschlagen, unter Berücksichtigung der Richtungsabhängigkeit den Taster um zumindest eine Drehachse zu drehen. Z.B. kann der Tastkopf ein Dreh-/Schwenkgelenk aufweisen oder über ein solches Gelenk mit einem Halter des Koordinatenmessgeräts verbunden sein. In diesem Fall wird das Dreh-/Schwenkgelenk derart angesteuert, dass eine gewünschte Position und/oder Ausrichtung des Tasters relativ zu dem Werkstück erreicht wird.

Allgemeiner formuliert kann insbesondere eine Steuerung des Koordinatenmessgeräts, an dem der Taster angebracht ist, die Richtungsabhängigkeit der Nachgiebigkeit des Tasters berücksichtigen und eine Ausrichtung und/oder Position des Werkstücks und des Tasters relativ zueinander berechnen. Neben der Richtungsabhängigkeit können dabei noch weitere Faktoren zu berücksichtigen sein, nämlich insbesondere geometrische Randbedingungen, die den Einsatz des Tasters beim Antasten eines bestimmten Oberflächenbereichs des Werkstücks nur in einem beschränkten Raumwinkelbereich zulassen.

Insbesondere können bei der Berechnung der relativen Position und/oder Ausrichtung des Tasters und des Werkstücks Haftreibungskoeffizienten und/oder Gleitreibungskoeffizienten für die Antastung des Werkstücks durch den Taster berücksichtigt werden. Insbesondere kann unter Berücksichtigung solcher Koeffizienten oder entsprechender physikalischer Modelle berechnet werden, bei welcher Antastkraft es zu einem Durchrutschen oder Ausweichen des Tasters an der Werkstückoberfläche kommt.

Insbesondere beim scannenden Messen kann alternativ oder zusätzlich zu der Richtung und/oder Position von Taster und Werkstück eine Geschwindigkeit berechnet werden, mit der der Taster an der Oberfläche des Werkstücks entlangfährt. Insbesondere kann ein Maximalwert der Geschwindigkeit berechnet werden, bei dem es noch nicht einem unbeabsichtigten Ausweichen des Tasters von dem beabsichtigten Scanningweg kommt.

In allen Fällen, in denen die Richtungsabhängigkeit der Nachgiebigkeit des Tasters und/oder Tastkopfes für die Planung und/oder Steuerung der Vermessung eines Werkstücks berücksichtigt wird, kann das Ergebnis der Berücksichtigung ein Grenzwert sein oder können das Ergebnis der Berechnung Grenzwerte sein, wobei der Grenzwert bzw. die Grenzwerte für den Betrieb des Koordinatenmessgeräts bzw. für die Durchführung des Verfahrens gelten. Beispiele für Grenzwerte sind Grenzen von räumlichen Gebieten oder Raumwinkelbereichen, wobei sich die Raumwinkelbereiche z.B. auf eine ausgezeichnete Richtung des Werkstücks oder des Tasters beziehen und/oder ein Maximalwert der Scanning-Geschwindigkeit oder der Beschleunigung des Tasters beim Scanning.

Ausführungsbeispiele der Erfindung werden nun unter Bezugnahme auf die beigefügte Zeichnung beschrieben. Die einzelnen Figuren der Zeichnung zeigen:

Fig. 1   ein kinematisches Modell eines Tasters mit einem Kardangelenk,

Fig. 2   Größe und Lage von Nachgiebigkeitsellipsen für einen Taster-Typ bei zwei verschiedenen Längen des Taststiftes,

Fig. 3   eine Anordnung mit einer Kalibrierkugel und einem Taster, wobei schematisch für eine Anzahl von Antastpunkten an der Oberfläche der Kalibrierkugel jeweils ein Auslenkungsvektor dargestellt ist,

Fig. 4      einen Antastvorgang, bei dem das Tasteelement eines Tasters zunächst in einer ersten Richtung verfahren wird und dann, unter Berücksichtigung der richtungsabhängigen Nachgiebigkeit, die Richtung, mit der das Tastelement verfahren wird, geändert wird,

Fig. 5      eine Ebene, in der beim Antasten einer Werkstückoberfläche durch eine Tastkugel die Auslenkung des Tasters verändert wird, bis es zum Abrutschen der Kugel an der Oberfläche kommt,

Fig. 6      eine Darstellung von oben auf die in Fig. 5 dargestellte Situation,

Fig. 7      einen Taster mit zwei rotatorischen Freiheitsgraden und einem linearen Freiheitsgrad der Bewegung.

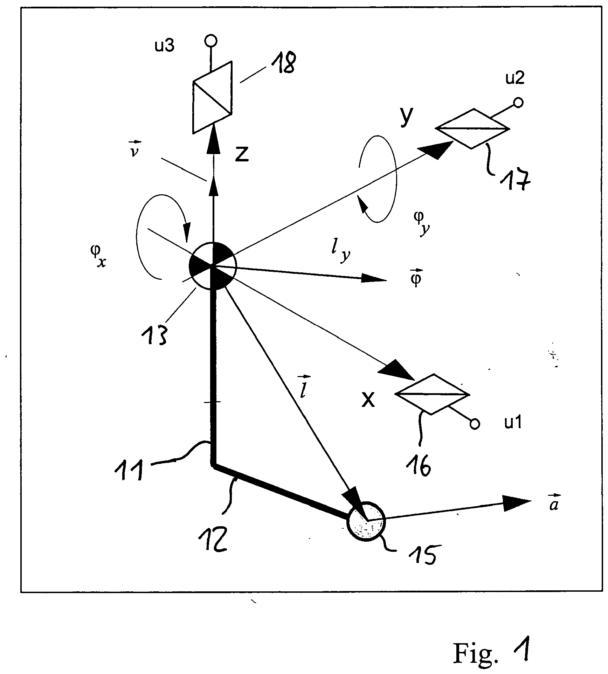

Fig. 1 zeigt schematisch einen Taststift 11 mit abgewinkeltem Schaft 12, der an einem in x-y-Koordinatenrichtung orientierten kardanischen Gelenk 13 gelagert ist, das in z-Richtung verschiebbar ist. der Ursprung des Koordinatensystems liegt im Mittelpunkt des kardanischen Gelenks 13. Die Auslenkung der Tastkugel 15 am freien Ende des Taststiftes 11 setzt sich aus der Rotationsbewegung $\phi_x$ um die x-Achse der Rotationsbewegung $\phi_y$ um die y-Achse sowie aus der Verschiebung v des Kardanpunktes (des Mittelpunktes des Gelenks 13) in z-Richtung zusammen. Die zur Auslenkung erforderliche Kraft bleibt dabei unberücksichtigt.

Für den Vektor a der Auslenkung folgt bei Beschränkung auf kleine Drehwinkel und der daraus folgenden Vereinfachung $\sin\varphi \approx \varphi$ und $\cos\varphi \approx 1$

$$\mathbf{a} = \mathbf{a}_{rot} + \mathbf{a}_v = \vec{\varphi} \times \vec{l} + \mathbf{v} \qquad (1)$$

wobei $a_{rot}$ der rotatorische Anteil des Auslenkungsvektors und $a_v$ der lineare Anteil des Auslenkungsvektors in z-Richtung sind. $\vec{l}$ bezeichnet den Ortsvektor des Mittelpunktes der Tastkugel 15.

In Fig. 1 sind außerdem drei Messwertgeber 16, 17, 18 des Tasters (hier des Taststiftes 11) dargestellt, die Messsignale u1, u2, u3, liefern. Dabei entspricht das Messsignal u1 der Rotation des Taststiftes um den Drehpunkt des Kardangelenks um die x-Achse, das Messsignal u2 der Rotation des Taststiftes um den Drehpunkt des Kardangelenks um die y-Achse und u3 der Verschiebung des Kardanpunktes in z-Richtung.

Dieses Modell ist lediglich ein Beispiel. Es kann z. B. verallgemeiner werden, indem auch eine Rotation um die z-Achse zugelassen wird.

Der Taststift ist im Kardanpunkt sowohl rotatorisch als auch translatorisch nachgiebig (d.h. elastisch) gefesselt. Die Auslenkung des Tasters erfolgt in jedem Falle durch eine an der Tastkugel 15 angreifende Meßkraft (oder Antastkraft genannt) f. Dabei ist deren Richtung innerhalb des Reibungswinkels durch die Normale der angetasteten Oberfläche des Werkstücks definiert. Die Auslenkung a der Tastkugel ist die Folge der elastischen Dreh- und Translationsnachgiebigkeit der Tasteraufhängung und der räumlichen Biegung des Taststiftes.

Unter der Annahme des idealen Falls eines orthogonalen Systems in Achsorientierung kann ein Modell abgeleitet werden. Dabei kann für den anhand von Fig. 1 erläuterten Spezialfall der gesperrten Achsen (Drehung um z- sowie Verschiebung in Richtung x- und y sind gesperrt) für diese Achsen (d. h. für die entsprechenden Freiheitsgrade der Bewegung) endliche Steifigkeit angenommen und damit ein allgemeines linear elastisches System eingeführt werden.

Der auf das Kardangelenk einwirkende Kraftvektor f bewirkt einen räumlichen Verschiebungsvektor v, der sich als lineare Abbildung mittels der symmetrischen Nachgiebigkeitsmatrix $N_k$ ergibt:

$$\mathbf{v} = \mathbf{N_k}\,\mathbf{f} \qquad (2)$$

Zu der Auslenkung infolge der Lagerung im elastischen Kardan addiert sich die Verschiebung $a_t$ der Tastkugel infolge der Durchbiegung des Taststiftes, die in gleicher Weise mittels einer Nachgiebigkeitsmatrix $N_t$ beschreibbar ist, so dass ganz allgemein gilt:

$$\mathbf{a} = \mathbf{a}_{rot} + \mathbf{a}_v + \mathbf{a}_t = \mathbf{N}_{ges}\mathbf{f} \qquad (3)$$

wobei $N_{ges}$ die Gesamt-Nachgiebigkeitsmatrix ist, die die rotatorische und lineare Nachgiebigkeit durch Rotation bzw. Verschiebung des Mittelpunktes des kardanischen Gelenks sowie die Durchbiegung des Taststiftes berücksichtigt.

Da der Kraftvektor f für die gesamte Übertragung der Auslenkung a zum Messsignal u (das sich im oben genannten Beispiel aus den Signalen u1, u2, u3 zusammensetzt) nur eine Mittlerrolle spielt, kann er für Herleitung der Tastergleichung eliminiert werden.

$$\mathbf{a} = \mathbf{H}\mathbf{u} \qquad (4)$$

wobei H die Übertragungsmatrix ist. Als einfacher Sonderfall kann ein Taster mit achsorientierten elastischen Eigenschaften und vernachlässigbarer Tasterdurchbiegung betrachtet werden, für den folgende Bedingungen gelten:

1. Die Nachgiebigkeitsmatrix $N_k$ ist in Diagonalform.
2. Die Drehnachgiebigkeitsmatrix, die die rotatorische Nachgiebigkeit im Gelenk 13 beschreibt, ist in Diagonalform. 3. Der Taster ist unendlich biegesteif.

Die Übertragungsmatrix $H_o$ für diesen einfachen Fall ergibt sich zu:

$$\mathbf{H} = \mathbf{H_0} = \begin{pmatrix} 0 & \dfrac{l_z}{k_2} & 0 \\ -\dfrac{l_z}{k_1} & 0 & 0 \\ \dfrac{l_y}{k_1} & \dfrac{l_x}{k_2} & \dfrac{1}{k_3} \end{pmatrix} \quad (5)$$

Als Fazit ist für den allgemeinen Fall zu nennen, dass der Taster für kleine Auslenkungen als lineares System mit einer voll besetzten Übertragungsmatrix H betrachtet werden kann. Die Matrix H enthält alle Übertragungseigenschaften, die aus den elastischen Koeffizienten für Drehung und Verschiebung des Kardangelenkes, aus der Biegung des beliebig geformten Taststiftes, aus etwaigen Restabweichungen von der Orthogonalität der Tasterachsen und aus der Einbaulage des Tastkopfes resultieren. Die Matrix H ist mit Ausnahme für die Ebene z=0 regulär und vermittelt eine umkehrbar eindeutige Abbildung von Signal- und Auslenkvektor. Damit sind die Voraussetzungen für eine Kalibrierung des Tasters durch Bestimmung der neun Matrixkoeffizienten gegeben.

Für die praktische Messung und insbesondere bei der Anwendung eines Tasters zum Scannen in einer vorgegebenen Schnittebene ist die Beurteilung des Verhaltens und der Bewegung der Tastkugel beim Antasten einer beliebig im Raum orientierten Fläche von Bedeutung. Weiter ist die sich einstellende Messkraft von Interesse. Die Beantwortung dieser Fragen gelingt über die Analyse des Einfluss- oder Nachgiebigkeitsellipsoides, das von der Nachgiebigkeitsmatrix $N_{ges}$ (siehe oben für den dort dargestellten Spezialfall eines Tasters mit Kardangelenk und gesperrten Freiheitsgraden der Bewegung) beschrieben wird, und den Zusammenhang zwischen Kraft und Auslenkung für den Mittelpunkt der Tastkugel beschreibt (siehe auch Gleichung 3).

Im Falle eines zentrischen Tasters mit $l_x=l_y=0$ (d.h. in dem oben beschriebenen Spezialfall gemäß Fig. 1 erstreckt sich der Taststift im entspannten Zustand exakt in z-Richtung) erhält man eine anschauliche Vorstellung, indem die Elemente in der Hauptdiagonalen die Nachgiebigkeit in den Achsrichtungen zugleich die Halbachsen des Nachgiebigkeitsellipsoides aufspannen:

$$\mathbf{N}_{ges} = \begin{pmatrix} \phi_y l_z^2 & 0 & 0 \\ 0 & \phi_y l_z^2 & 0 \\ 0 & 0 & n_z \end{pmatrix} \quad (6)$$

Mit wachsender Taststiftlänge $l_z$ wächst die Quernachgiebigkeit quadratisch, die Nachgiebigkeit in z-Richtung bleibt dagegen konstant.

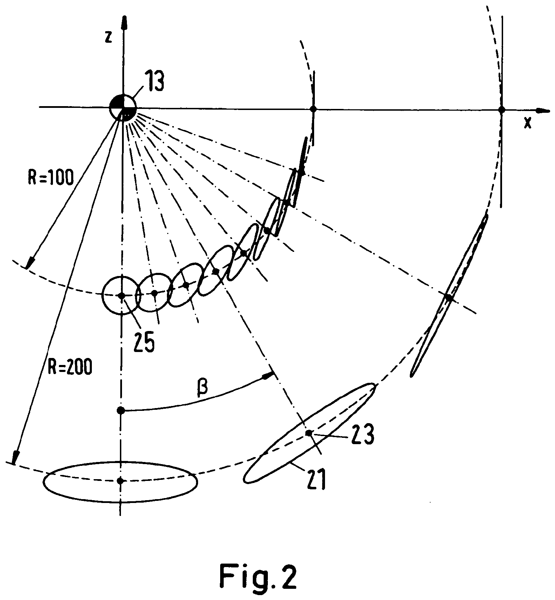

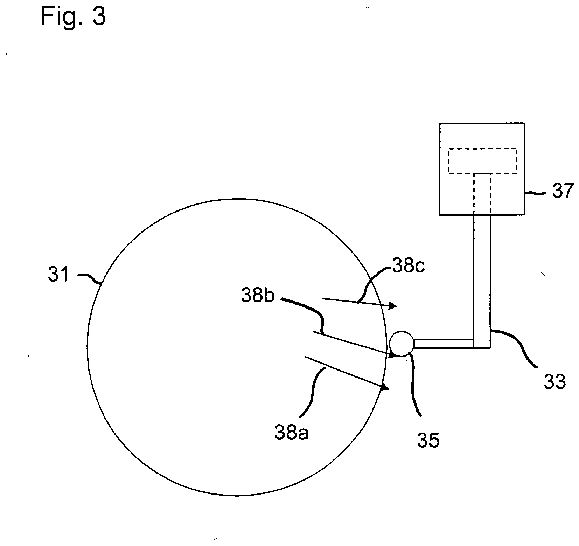

Für den allgemeinen Fall eines Taststiftes mit beliebiger Ausrichtung relativ zu den elastisch beweglichen Teilen des Tasters (z. B. mit abgewinkeltem Taststift, siehe Fig. 7) erhält man die Hauptachsenrichtungen des Nachgiebigkeitsellipsoides im Raum als Eigenvektoren und die zugehörigen Nachgiebigkeiten als Eigenwerte der vorstehenden Nachgiebigkeitsmatrix $N_{ges}$. Ein Taster mit abgewinkeltem Taststift ist z. B. in Figur 3 mit Bezugszeichen 33 bezeichnet. Das Nachgiebigkeitsellipsoid für einen solchen Taster ist beispielhaft in Figur 2 mit Bezugszeichen 21 bezeichnet, jedoch um 180 Grad gedreht und der Anschaulichkeit wegen nur 2-dimensional als Ellipse.

Fig. 2 zeigt die Nachgiebigkeitsellipsen für die x-z-Ebene im Abstand R=100mm und R=200 vom Kardanpunkt und in Abhängigkeit vom Winkel zur Achse. Da das System rotationssymmetrisch ist, zeigt dieses Bild das Verhalten für jede beliebige Ebene durch die z-Achse. Der Ursprung des Koordinatensystems liegt wiederum in der Drehachse des Gelenks 13. Für den Fall R=200 ist eine der Nachgiebigkeitsellipsen mit dem Bezugszeichen 21 bezeichnet. Im Zentrum dieser Ellipse 21 liegt der entsprechende Ort 23, an dem sich der Mittelpunkt der Tastkugel befindet.

Für den Fall R=100 und wenn der Ort des Mittelpunktes der Tastkugel auf der z-Achse liegt, ist die Ellipse nahezu kreisförmig. Dieser Ort 25 ist der Auslegepunkt, d.h. es ist keine Richtungsunabhängigkeit des Tasters vorhanden. Für diesen Fall hat das Nachgiebigkeitsellipsoid die Form einer Kugel. Wenn der Ort des Mittelpunktes der Tastkugel auf der x-Achse liegt, ist die Ellipse eine Linie.

Für Tastkugelorte außerhalb der Achse stellt sich eine Ellipse ein, deren große Hauptachse näherungsweise tangential zum Kreis um das Gelenk 13 liegt. Die kleine Halbachse (Nachgiebigkeit) nimmt sehr rasch mit dem Winkel β (d. h. mit dem Winkel zwischen Taststift-Längsachse und z-Achse) ab. Längs der x-Achse (x-y-Ebene) ist die Funktion des Tasters nicht mehr gegeben, und es ist keine Auslenkung mehr möglich. Dieser Fall tritt eher ein, wenn das Achsenverhältnis der Nachgiebigkeitsellipse größer wird.

Nicht beanspruchte Beispiele zur Bestimmung der Nachgiebigkeitsmatrix aus Messpunkten bei der Kalibrierung: Im Folgenden wird unter Bezugnahme auf Fig. 3 ein nicht beanspruchtes Beispiel der Bestimmung der Nachgiebigkeitsmatrix aus Messdaten an einem Kalibrierkörper (z. B. eine Kugel) beschrieben. Dabei wird für eine Anzahl von Antastpunkten an der Kalibrierkugel jeweils die zugehörige Antastkraft benötigt. Insbesondere kann die Nachgiebigkeitsmatrix (generell, nicht nur bei diesem Ausführungsbeispiel) auch aus den gleichen Messpunkten berechnet werden, die für die Sensorkalibrierung angetastet werden müssen.

Bei einzelnen Antastpunkten wird die Auslenkung des Tastelements aus seiner Ruheposition von der Steuerung des Koordinatenmessgeräts auf einen vorgegebenen Betrag (z.B. 100 $\mu$m) gesteuert und/oder geregelt. Der vorgegebene Betrag wird vorzugsweise so gewählt, dass er beim Bewegen des Tasters ohne Antastung eines Objekts nicht erreicht wird (z. B. werden beim Verfahren eines Tasters zum Ort der Antastung lediglich Auslenkungen von ca. 10 $\mu$m erreicht). Damit ist für jeden Punkt bekannt, dass der Kraftvektor innerhalb des (Haft-) Reibkegels liegt.

Aus den Auslenkungen von einer Anzahl n von angetasteten Punkten kann die Nachgiebigkeitsmatrix errechnet werden. Fig. 3 zeigt eine Kalibrierkugel 31 und einen Taster 33, der einen abgewinkelten Taststift aufweist, an dessen freiem Ende sich eine Tastkugel 35 als Tastelement befindet. Ein Kardangelenk 37, das eine Auslenkung des Tasters 33 ermöglicht, ist oben rechts schematisch angedeutet. Ferner sind für lediglich drei Antastpunkte die zugehörigen Auslenkungsvektoren 38a, 38b, 38c eingezeichnet. Dabei befinden sich die angetasteten Punkte am Beginn des jeweiligen Pfeils 38. Die Darstellung hinsichtlich der Auslenkungsvektoren 38 ist schematisch zu verstehen. In der Praxis wird die Auslenkung wesentlich kleiner sein. Ferner wird in der Praxis typischerweise eine wesentlich größere Anzahl von Oberflächenpunkten angetastet.

Für jeden Antastpunkt in Fig. 3 gilt, dass die Tasterauslenkung a gleich der Nachgiebigkeitsmatrix N multipliziert mit der Antastkraft f ist (s.o., Gleichung 3) Die Richtung der Kraft f kann für jeden Antastpunkt als radial zum Kalibrierkugelmittelpunkt, d.h. als normal zur Oberfläche angenommen werden. Durch Ausgleichsrechnung (so genannter Best Fit) kann damit eine Nachgiebigkeitsmatrix N gefunden werden, mit der für jede Oberflächennormale die optimale Antastrichtung bestimmt werden kann. Vorzugsweise wird dabei eine Vielzahl von Messpunkten, z. B. eine Anzahl von mehr als 50, z. B. mehr als 100 Messpunkten verwendet.

Dabei ist zu beachten, dass die Größe der Kraft nicht exakt bekannt ist - nur die Richtung kann damit bestimmt werden.

Da die Messkraft als normal zur Oberfläche der Kugel angenommen wurde, wird die Nachgiebigkeitsmatrix N lediglich näherungsweise bestimmt. Nun kann die Bestimmung der Nachgiebigkeitsmatrix durch erneutes Antasten einer Mehrzahl von Punkten auf der Oberfläche der Kugel wiederholt werden, wobei die bereits ermittelte Nachgiebigkeitsmatrix für die Bestimmung der Koordinaten der Messpunkte und/oder für die Bestimmung des jeweiligen Auslenkungsvektors genutzt wird, z. B. durch die Steuerung des Koordinatenmessgeräts. In diesem Fall wird also nicht mehr angenommen, dass die Messkraft normal zur Oberfläche ausgerichtet ist. Anschließend kann eine verbesserte Nachgiebigkeitsmatrix berechnet werden. Diese Vorgehensweise kann weiter iteriert werden.

Alternativ zu der zuvor beschriebenen Vorgehensweise kann als erste Näherung der Nachgiebigkeitsmatrix (d.h. für den ersten Iterationsschritt) eine Matrix verwendet werden, die auf andere Weise bestimmt wurde, z. B. durch eine frühere Kalibrierung und/oder durch eine Modell-Rechnung.

Werden die Messdaten im Scanning - Verfahren aufgenommen so ist zu beachten, dass die Scanninglinien im idealen Fall vorwärts und rückwärts mit exakt gleichen Sollauslenkungen bzw. Kräften gefahren werden. Behelfsweise kann auch mit ähnlichen Kräften (als "ähnlich" können Kräfte definiert sein, wenn ihre Differenz kleiner als ein vorgegebener Grenzwert ist) vorwärts und rückwärts gescannt werden. Andernfalls (bei unähnlichen Kräften) ergeben sich systematische Fehler bei der Berechnung der Nachgiebigkeitsmatrix (z.B. wegen Hysterese-Effekten). Das gleiche gilt für die Bestimmung anderer Kalibrierparameter eines Tasters.

Bei dem zuvor beschriebenen Verfahren der Bestimmung der Nachgiebigkeitsmatrix hängt der Restfehler vom Reibkegelwinkel ab, d.h. von dem Winkel zwischen der Mittelachse des Reibkegels und der Normalen. Um diesen Fehler zu verringern, kann die Ausrichtung der Mittelachse des Reibkegels durch Durchrutschen des Tastelements an der Oberfläche des Werkstücks (hier: der Kalibrierkugel) ermittelt werden. Dieses Verfahren wird zweckmäßig nicht für jeden Antastpunkt der Sensorkalibrierung durchgeführt, sondern wahlweise nur an einigen wenigen Antastpunkten. Alternativ können in einem separaten Messablauf zusätzliche Messpunkte unabhängig von der eigentlichen Sensorkalibrierung aufgenommen werden. Für jeden Antastpunkt wird hierzu nach erfolgter Antastung das Tastelement durch das Koordinatenmessgerät (KMG) in mindestens vier Richtungen (dabei können jeweils zwei Richtungen einander entgegen gesetzte Richtungen sein) verfahren. Durch Aufnahme und vorzugsweise auch Aufzeichnung von Sensorauslenkung und der durch das KMG bestimmten Position kann die Auslenkung ermittelt werden, bei der das Tastelement wegrutscht. Dabei wird z. B. ein Zeitpunkt detektiert, an dem die Sensorauslenkung schlagartig abnimmt. Die Auslenkung unmittelbar vor der schlagartigen Abnahme kann als maximale Auslenkung in der jeweiligen Verfahrrichtung verwendet werden, bei der es zum Wegrutschen kommt. Aus den in den mindestens vier Richtungen auf diese Weise ermittelten Punkten kann die Richtung der Mittelachse des Reibkegels bestimmt werden. Insbesondere ist die Mittelachse gegenüber der Oberflächennormalen (im Vergleich zu der entgegengesetzten Richtung) in derjenigen Richtung entlang der Oberfläche geneigt, in der es beim Verfahren des Tastelements später (d.h. in größerer Entfernung zum ursprünglich angetasteten Oberflächenpunkt) zu einem Durchrutschen kommt.

Die optimale Sensorauslenkung (d. h. die Richtung des Auslenkungsvektors bei senkrecht zur Oberfläche gerichteter Antastkraft) kann somit z.B. durch Schwerpunktrechnung aller maximalen Auslenkungen oder durch Schnittpunktberechnung der Verbindungslinien der maximalen Auslenkungen ermittelt werden.

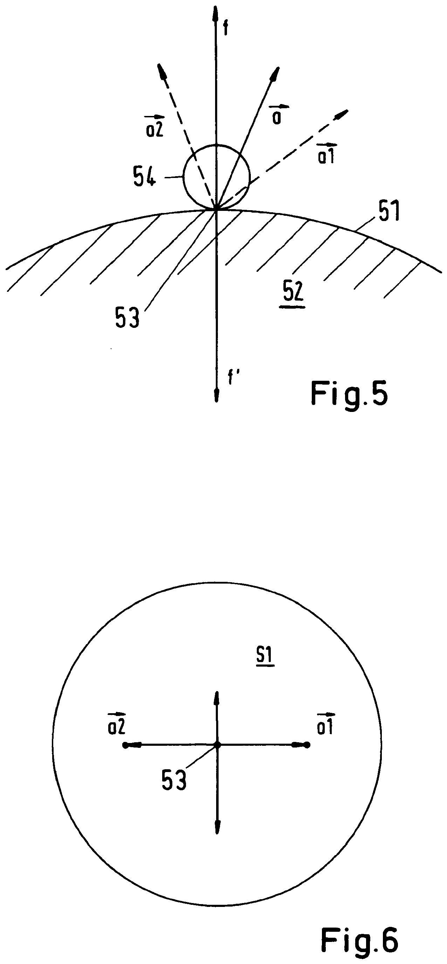

Fig. 5 zeigt einen Bereich einer Oberfläche 51 eines Werkstücks 52. An einem Antastpunkt 53 der Oberfläche 51 liegt das Tastelement 54 eines Tasters an. Im dargestellten Beispiel ist das Tastelement 54 eine Tastkugel. Weitere Bestandteile des Tasters, insbesondere ein Schaft eines Taststiftes, an dessen freiem Ende die Tastkugel 54 befestigt ist, sind aus Gründen der Erkennbarkeit der Darstellung weggelassen.

Die Tastkugel 54 übt eine Antastkraft f auf die Oberfläche 51 aus. Die Gegenkraft f, die die Oberfläche 51 dementsprechend auf die Tastkugel 54 ausübt, ist ebenfalls dargestellt. In dem hier dargestellten Fall ist die Gegenkraft f senkrecht zur Oberfläche 51 ausgerichtet, d. h. die Antastkraft f wird in optimaler Weise auf die Oberfläche 51 ausgeübt. Ein Abrutschen der Tastkugel an der Oberfläche 51 ist nicht möglich.

Wegen der Richtungsabhängigkeit der Nachgiebigkeit des Tasters ist die der Antastkraft f entsprechende Auslenkung a, bei der es sich (wie in Fig. 5 durch einen Vektorpfeil dargestellt) um einen Vektor handelt, in einer anderen Richtung orientiert als der Senkrechten zur Oberfläche.

Um die Richtung des optimalen Auslenkungsvektors, die der optimalen Ausrichtung der Antastkraft f entspricht, zu ermitteln, wird die Auslenkung variiert. Hierzu wird der Antastpunkt 53 zunächst in einer beliebigen Richtung der Auslenkung, die jedoch vorzugsweise etwa normal zur Oberfläche ausgerichtet ist oder gemäß einer vorhergehenden Schätzung zur Normalen geneigt ausgerichtet ist, angetastet. Dabei wird eine Antastkraft auf die Oberfläche 51 ausgeübt, die in der Regel nicht senkrecht auf die Oberfläche 51 wirkt. Anschließend wird die Auslenkung hinsichtlich ihrer Richtung verändert, in dem das Koordinatenmessgerät versucht, das Tastelement 54 an der Oberfläche 51 entlang zu verfahren. Zunächst gelingt dies nicht, da die Haftreibung dies verhindert. Wenn die Auslenkung jedoch den Reibkegel verlässt, kommt es zum Durchrutschen der Tastkugel an der Oberfläche 51. Dies kann wie oben beschrieben detektiert werden.

Z. B. versucht das Koordinatenmessgerät, das Tastelement 54 in der Darstellung von Fig. 5 einmal nach links und einmal nach rechts (so wie vorzugsweise auch in andere Richtungen, z. B. nach vorne und nach hinten) an der Oberfläche 51 entlang zu verfahren. Dabei wird kontinuierlich die Antastkraft aufgebracht. Bei dem Verfahren nach links kommt es bei dem Auslenkungsvektor a2 zum Durchrutschen. Bei dem Verfahren nach rechts kommt es bei dem Auslenkungsvektor a1 zum Durchrutschen. Der optimale Auslenkungsvektor a (zumindest bezüglich der Figurenebene der Fig. 5) liegt auf dem halben Winkel, den die Auslenkungsvektoren a1 und a2 zwischen sich einschließen.

Fig. 6 zeigt die in Fig. 5 dargestellte Situation von oben, wobei die Tastkugel 54 nicht dargestellt ist. Durch vier Pfeile in Fig. 6 ist dargestellt, in welche Richtungen das Koordinatenmessgerät versucht, das Tastelement ausgehend von dem Antastpunkt 53 zu verschieben. Die Spitzen der maximalen Auslenkungsvektoren a1 und a2 sind durch einen kleinen ausgefüllten Kreis in Fig. 6 dargestellt.

Insbesondere alternativ zu der oben beschriebenen Methode der Bestimmung der Nachgiebigkeitsmatrix mit mehreren Iterationsschritten kann lediglich der 1. Iterationsschritt ausgeführt werden und für jeden Antastpunkt die durch Durchrutschen ermittelte Richtung der Sensorauslenkung verwendet werden, wodurch die Bestimmung der Nachgiebigkeitsmatrix genauer wird.

Die Ermittlung der Nachgiebigkeitsmatrix durch Durchrutschen kann vor der Kalibrierung erfolgen. Dabei ist allerdings zu beachten, dass die Sensormatrix zu diesem Zeitpunkt im Allgemeinen noch nicht exakt bekannt ist. Daraus ergibt sich ein systematischer Fehler bei der Bestimmung der Nachgiebigkeitsmatrix. Dieser ist vor allem bei Kardangelenken und ungünstigen Tastergeometrien nicht zu vernachlässigen. Unter der Sensormatrix (auch Übertragungsmatrix genannt, siehe oben) wird eine Matrix verstanden, mit der aus (unkorrigierten, d.h. den von den Messwertgebern 16', 17', 18' gemäß Fig. 7 gelieferten) Sensorauslenkungssignalen korrigierte (insbesondere in metrische, kartesische Koordinaten umgerechnete) Sensorauslenkungen berechnet werden können. Die Berechnung dieser Matrix ist damit ein wichtiger Teil der Kalibrierung solcher Sensoren. Zusätzlich können eventuell weitere Kalibrierparameter errechnet werden.

Um bei der Datenaufnahme (insbesondere Aufnahme der Daten, aus denen sich die jeweilige momentane Position des angetasteten Oberflächenpunktes bestimmen lässt) zum Zweck der Kalibrierung der Sensormatrix bereits die Sensorauslenkung unter Berücksichtigung der Nachgiebigkeitsmatrix einregeln zu können, wird daher, als ein nicht beanspruchtes Beispiel, folgende Vorgehensweise vorgeschlagen:

1. Zu Beginn oder vor der Kalibrierung wird ein guter Startwert für die Nachgiebigkeitsmatrix ermittelt. Bei Tastern mit zumindest einem rotatorischen Freiheitsgrad (z. B. bei Tastern mit einem Kardangelenk), bei denen die Nachgiebigkeit des Gelenks im Vergleich zur Nachgiebigkeit des Tasters ohne Berücksichtigung des Gelenks groß ist, kann dabei auf Messungen verzichtet werden. In diesem Fall bietet sich eine Berechnung der Nachgiebigkeitsmatrix durch Transformation der Nachgiebigkeitsellipsoide in Kardankoordinaten (d. h. zumindest teilweise auf rotatorische Freiheitsgrade bezogene Koordinaten) ohne Berücksichtigung der Nachgiebigkeit des Taststifts an.

2. Sensorkalibrierung durch Aufnahme von Messpunkten und Bestimmung der Sensormatrix. Details von möglichen Vorgehensweisen wurden oben beschrieben.

3. Nach der Bestimmung der Sensormatrix wird unter Verwendung der Sensormatrix die Nachgiebigkeitsmatrix berechnet, z. B. durch das oben unter Bezugnahme auf Fig. 3 beschriebene Verfahren. Allerdings ist nun die Sensormatrix bekannt, sodass der oben erwähnte Restfehler vermieden werden kann.

Beim Antasten von Einzelpunkten (d.h. nicht beim scannenden Abtasten) unter Berücksichtigung der Nachgiebigkeitsmatrix ergibt sich folgendes Problem: Der Antastpunkt auf der Oberfläche des Werkstücks wird in der Regel in der so genannten Nominalrichtung (der Richtung senkrecht zur Werkstückoberfläche) gesucht. Dazu bewegt das KMG das Tastelement (insbesondere die Tastkugel) von einer Ausgangsposition (z. B. der so genannten Suchposition in einem definierten Antast-Suchabstand zur Oberfläche des Werkstücks) senkrecht auf den Sollantastpunkt (z. B. den aus CAD-Daten ermittelten Antastpunkt) zu. Sobald der Betrag der Messkraft und/oder der Sensorauslenkung eine definierte Schwelle überschritten hat wird ein Messpunkt übemommen, d.h. als gültiger Messpunkt erkannt. Zur Bestimmung der Koordinaten des Messpunktes können unmittelbar die von dem KMG gelieferte Position des Tastelements und die Tasterauslenkung verwendet werden.

Alternativ oder zusätzlich kann eine definierte Auslenkung bzw. Messkraft eingestellt werden, d.h. der Taster wird von dem KMG so verfahren, dass beim Antasten des Oberflächenpunktes eine hinsichtlich ihres Betrages und optional auch hinsichtlich ihrer Richtung vorgegebene Auslenkung bzw. Messkraft eingestellt wird. Dabei kann die Auslenkung bzw. Messkraft geregelt werden, d.h. sie wird z. B. bei einem eventuellen Überschreiten der Sollgröße wieder reduziert bzw. es werden allgemeiner formuliert Abweichungen auf den Sollwert und optional die Sollrichtung ausgeregelt.

Bei diesem Verfahren ergibt sich zwangsläufig das Problem, dass bis zum Erreichen der genannten Schwelle bzw. dem erstmaligen Erreichen des Sollwertes das KMG nicht im Kraftvektorraum geregelt wird. Bei ungünstigen Tastergeometrien kann das Tastelement (z. B. die Tastkugel) bereits den Reibkegel verlassen haben, ist also bereits weggerutscht. Ein wesentlicher Grund dafür, dass bis zum erstmaligen Erreichen des Sollwertes bzw. der genannten Schwelle nicht im Kraftvektorraum geregelt werden kann, liegt darin, dass sich Auslenkungen auch beim Verfahren des Tasters ohne Antastung eines Gegenstandes ergeben können, z. B. durch Schwingungen oder Erschütterungen. Da die Auslenkungen auch beim Antasten eines Werkstücks in der Regel sehr klein sind, z. B. in der Größenordnung von 100 μm, ist zumindest mit Auslenkungen ohne Antastung von Gegenständen in der Größenordnung von 10 μm zu rechnen.

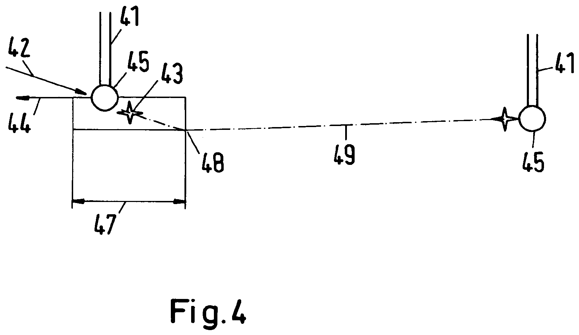

Daher wird folgendes Vorgehen vorgeschlagen. Bei der folgenden Beschreibung wird auf Fig. 4 Bezug genommen. In der Figur sind der Taststift mit 41 und das Tastelement (hier eine Tastkugel) mit 45 bezeichnet:

1. Z. B. aus einem vorzugsweise computergesteuerten Ablauf (z. B. erzeugt durch Lernprogrammierung und/oder generiert aus einem CNC, Computer Numerical Control, -Modell) werden die Suchposition 45 und der Sollantastpunkt 43 an die Steuerung des KMG übergeben oder die Steuerung ist selbst dazu in der Lage, die Suchposition und den Sollantastpunkt zu ermitteln.

2. Aus einem von der zulässigen Werkstück-Masstoleranz, vom KMG-Typ und/oder vom Tastertyp abhängigen Regelungs-Suchfenster wird ein Regelungsbereich 47 um den Sollantastpunkt 43 berechnet.

3. Ein Startpunkt 48 der Regelung für das Tastelement wird so berechnet, dass die Bewegungsrichtung von diesem Startpunkt zum Sollantastpunkt 43 bei Kontakt mit der Oberfläche des Werkstücks eine Messkraft (Antastkraft) senkrecht zur Oberfläche des Werkstücks ergibt. Dazu wird die Nachgiebigkeitsmatrix verwendet. Gemäß Gleichung (3) ermöglicht es die Nachgiebigkeitsmatrix, durch Multiplizieren der Matrix mit dem als normal zur Oberfläche des Werkstücks gerichteten Kraftvektor den Auslenkungsvektor zu berechnen.

4. Das KMG fährt das Tastelement 45 von der Suchposition 45 z. B. mit einer vorgegebenen Antastsuchgeschwindigkeit geradlinig zu dem berechneten Startpunkt 48 der Regelung.

5. Ab dem Startpunkt 48 der Regelung verfährt das KMG das Tastelement 45 so, dass bei Antastung die Messkraft 44 senkrecht zur Werkstückoberfläche steht. In der im linken Teil der Fig. 4 dargestellten Position des Tastelements 45 ist das Tastelement 45 in Kontakt mit der Werkstückoberfläche (die nicht dargestellt ist).

6. Befindet sich der Ist-Antastpunkt (Soll- und Ist-Punkt können bei erheblichen Fertigungsmängeln deutlich voneinander abweichen) nicht innerhalb des Regelungssuchfensters 47 wird der Ist-Antastpunkt als neuer Sollantastpunkt übemommen und die Antastung wiederholt.

Das Regelungssuchfenster wird vorzugsweise so gewählt, dass es im Verhältnis zum Antastsuchweg 49 klein ist.

Bei manchen Anwendungen werden Raumpunkte von der Auswertungseinrichtung des KMG (die die Positionen der angetasteten Oberflächenpunkte bestimmt) so verrechnet, dass auch kleine, zur Oberfläche des Werkstücks tangentiale Abweichungen der Ist - Messpunkte im Vergleich zu den Soll-Punkten zu Auswertefehlern führen. Bei kleinen Regelungssuchfenstern und kleiner Werkstück-Oberflächenkrümmung kann der Ist - Antastpunkt durch Projektion so verschoben werden, dass er keine tangentiale Abweichung hat. Dieses Verfahren ist in vielen Auswerte - Softwarepaketen enthalten und kann hier bevorzugt eingesetzt werden.

Ein weiterer Vorzug des dargestellten Verfahrens ist, dass bei günstigem (großem) Verhältnis von Antastsuchweg zu Regelungssuchfenster die von dem Tasteelement tatsächlich gefahrene Bahn von der vorherberechneten Bahn nur geringe Abweichungen hat. Dies ist von Vorteil, um die Bahnberechnung von den Nachgiebigkeitsmatrizen der verschiedenen Sensoren (Tastern) zu trennen, d.h. die Bahn kann unabhängig davon berechnet werden, welcher Sensor für die Vermessung des Werkstücks verwendet wird: Die Berechnung der Zwischenpositionen - hier der Suchposition - erfolgt häufig mit Hilfe eines CAD Modells. Innerhalb dieses CAD Modells kann auch eine Kollisionsschutzbetrachtung (s.o., also eine Vermeidung von falscher Zuordnung von Soll- und Ist-Antastpunkt) erfolgen. Wenn die Steuerung des KMG z. B. nur die Informationen über die Suchposition und den Sollantastpunkt vom CAD-Modell erhält, muss die Nachgiebigkeitsmatrix nur in der Steuerung berücksichtigt werden, nicht aber im CAD-Modell.

Fig. 7 zeigt eine konkrete Ausführungsform des in Fig. 1 schematisch dargestellten Tasters. An einer Halterung 75, die z. B. durch ein Gehäuse des Tasters oder durch eine Befestigung zum Befestigen des Tasters an einem Arm eines Koordinatenmessgeräts oder an einer Pinole ist, sind zwei Blattfedern 72, 73, angebracht, die in einem Abstand zueinander und parallel zueinander angeordnet sind. An den der Befestigung 75 gegenüberliegenden Enden sind die Blattfedern 72, 73 mit einer Plattform 71 verbunden. Der abgewinkelte Taststift 11 ist in der Mitte der Plattform 71 an der Unterseite der Plattform 71 befestigt. Die y-Achse verläuft in der Mittellinie zwischen den beiden Blattfedern 72, 73. Der Teil des Schafts 12 des Taststifts 11, welcher an der Plattform 71 befestigt ist, erstreckt sich in z-Richtung.

Aufgrund der Beweglichkeit der Blattfedern 72, 73 nach oben und unten (d. h. in z-Richtung), wobei sich die Blattfedern in ihrer Längsrichtung jedoch nicht verlängern können, führt die Plattform und damit der Taststift 11 dabei eine Drehung um eine parallel zur x-Achse verlaufenden Drehachse aus, die durch eine Überlagerung einer Drehung um die x-Achse und um eine Linearverschiebung in z-Richtung beschrieben werden kann. Ferner ist eine Verdrehung der Plattform um die y-Achse möglich, wenn sich das an der Plattform 71 befestigte Ende der Blattfeder 73 nach oben bewegt und das Ende der Blattfeder 72 gleichzeitig nach unten bewegt oder umgekehrt.

Am freien Ende des Taststifts 11 befindet sich die Tastkugel 15. Der Kraftvektor f und der Auslenkungsvektor a sind schematisch dargestellt. Ihre Richtungen fallen nicht zusammen, da die Elastizität des Tasters richtungsabhängig ist, wie beschrieben. Insbesondere ist eine Drehung um die z-Achse gesperrt, d. h. nicht möglich. Ebenfalls gesperrt ist eine Linearbewegung in y-Richtung.

Die für die Detektion der möglichen Bewegungen der Plattform 71 und damit des Tasters 11 verwendeten Sensoren 16', 17', 18' sind ähnlich wie in Fig. 1 durch Quadrate mit einer diagonalen Linie dargestellt. Sie greifen an den mit 76a, 76b, 76c bezeichneten Stellen an der Oberseite der Plattform 71 an. Verschieben sich diese Punkte in z-Richtung wird dies von den Sensoren detektiert und werden entsprechende Messsignale u1', u2', u3' generiert. Diese Messsignale können in die Messsignale der Sensoren 16, 17, 18 gemäß Fig. 1 umgerechnet werden. Das Beispiel zeigt, dass auch bei Tastern mit rotatorischen Freiheitsgraden der Bewegung lediglich Messwertgeber verwendet werden können, die eine Linearbewegung detektieren.

**Patentansprüche**

1. Verfahren zum Vermessen eines Werkstücks (52), wobei

   - zumindest ein Punkt (53) einer Oberfläche (51) des Werkstücks (52) von einem Taster (11) angetastet wird, wobei der Taster (11) eine Antastkraft auf die Oberfläche (51) ausübt und der Taster (11) relativ zu einer Befestigung des Tasters (11) ausgelenkt wird,
   - aufgrund der Auslenkung eine Position des Punktes (53) der Oberfläche (51) bestimmt wird, **dadurch gekennzeichnet, dass**
   - eine Richtungsabhängigkeit einer Nachgiebigkeit des Tasters (11) ermittelt wird und/oder bekannt ist,
   - der Taster (11) und das Werkstück (52) derart unter Berücksichtigung der Richtungsabhängigkeit relativ zueinander positioniert und/oder ausgerichtet werden, dass es beim Antasten des Punktes (53) der Oberfläche (51) nicht oder mit geringer Wahrscheinlichkeit zu einem unbeabsichtigten Abrutschen des Tasters (11) an der Oberfläche (51) oder nicht oder mit geringer Wahrscheinlichkeit zu einem unbeabsichtigten Abweichen des Tasters (11) von einem beabsichtigten Weg auf der Oberfläche (51) kommt.

2. Verfahren nach dem vorhergehenden Anspruch, wobei unter Berücksichtigung der Richtungsabhängigkeit das Werkstück (52) gedreht wird.

3. Verfahren nach einem der vorhergehenden Ansprüche, wobei unter Berücksichtigung der Richtungsabhängigkeit der Taster (11) um zumindest eine Drehachse gedreht wird.

4. Verfahren nach einem der vorhergehenden Ansprüche, wobei eine Steuerung eines Koordinatenmessgeräts, an dem der Taster (11) montiert ist, für den Punkt der Oberfläche (51) des Werkstücks (52) unter Berücksichtigung der Richtungsabhängigkeit der Nachgiebigkeit eine Ausrichtung und/oder Position des Werkstücks (52) und des Tasters (11) relativ zueinander berechnet und eine Bewegungseinrichtung zum Bewegen des Werkstücks (52) und/oder zum Bewegen des Tasters (11) ansteuert, sodass die Ausrichtung und/oder Position beim Antasten eingehalten wird.

5. Verfahren nach einem der vorhergehenden Ansprüche, wobei die Richtungsabhängigkeit der Nachgiebigkeit zumindest durch Werte beschrieben wird, die den Hauptachsen eines Ellipsoids entsprechen, wobei das Werkstück (52) und der Taster (11) so relativ zueinander ausgerichtet werden, dass die Antastkraft nicht mit der Richtung derjenigen Hauptachse zusammenfällt, die dem kleinsten Nachgiebigkeitswert entspricht.

6. Verfahren zum Vermessen eines Werkstücks (52), wobei

- zumindest ein Punkt einer Oberfläche (51) des Werkstücks (52) von einem Taster (41) angetastet wird, wobei der Taster (41) eine Antastkraft auf die Oberfläche (51) ausübt und der Taster (41) relativ zu einer Befestigung des Tasters (41) ausgelenkt wird,
- aufgrund der Auslenkung eine Position des Punktes der Oberfläche (51) bestimmt wird, **dadurch gekennzeichnet, dass**
- eine Richtungsabhängigkeit einer Nachgiebigkeit des Tasters (41) ermittelt wird und/oder bekannt ist,
- unter Verwendung der Richtungsabhängigkeit eine Auslenkungsrichtung berechnet wird, in der der Taster (41) beim Antasten der Oberfläche (51) ausgelenkt wird, während er die Antastkraft auf das Werkstück (52) ausübt,
- der Taster (41) zunächst senkrecht zur Oberfläche (51) an die Oberfläche (51) heranbewegt wird und danach
- der Taster (41) in einer Richtung, die der Auslenkungsrichtung entgegengesetzt ist, bis zu der Oberfläche (51) bewegt wird oder

     - wenn der Taster (41) bereits senkrecht bis zu der Oberfläche (51) heran bewegt wurde
     - der Taster (41) in der Auslenkungsrichtung ausgelenkt wird.

7. Verfahren nach dem vorhergehenden Anspruch, wobei die Auslenkungsrichtung so berechnet wird, dass die Antastkraft senkrecht zu der Oberfläche (51) steht.

8. Verfahren zum Vermessen eines Werkstücks (52), wobei

     - zumindest ein Punkt (53) einer Oberfläche (51) des Werkstücks (52) von einem Taster (11) angetastet wird, wobei der Taster (11) eine Antastkraft auf die Oberfläche (51) ausübt und der Taster (11) relativ zu einer Befestigung des Tasters (11) ausgelenkt wird,
     - aufgrund der Auslenkung eine Position des Punktes (53) der Oberfläche (51) bestimmt wird, **dadurch gekennzeichnet, dass** aus der Auslenkung unter Berücksichtigung einer richtungsabhängigen Nachgiebigkeit des Tasters (11) die Antastkraft berechnet wird und als Steuer- bzw. Regelgröße verwendet wird.

9. Koordinatenmessgerät mit einem Taster (11) zum Antasten von zumindest einem Punkt (53) einer Oberfläche (51) eines Werkstücks (52), wobei das Koordinatenmessgerät derart ausgestaltet ist, dass der Taster (11) beim Antasten eine Antastkraft auf die Oberfläche (51) ausübt und der Taster (11) relativ zu einer Befestigung des Tasters (11) ausgelenkt wird, und wobei das Koordinatenmessgerät eine Steuerung aufweist, wobei die Steuerung ausgestaltet ist, das Verfahren zum Vermessen eines Werkstücks (52) nach einem der Ansprüche 1 - 8 zu steuern, nämlich eine Richtungsabhängigkeit einer Nachgiebigkeit des Tasters (11) zu ermitteln und/oder zu verwenden und

     - den Taster und das Werkstück (52) derart unter Berücksichtigung der Richtungsabhängigkeit relativ zueinander zu positionieren und/oder auszurichten, dass es beim Antasten des Punktes (53) der Oberfläche (51) nicht oder mit geringer Wahrscheinlichkeit zu einem unbeabsichtigten Abrutschen des Tasters (11) an der Oberfläche (51) oder nicht oder mit geringer Wahrscheinlichkeit zu einem unbeabsichtigten Abweichen des Tasters (11) von einem beabsichtigten Weg auf der Oberfläche (51) kommt, und/oder
     - unter Verwendung der Richtungsabhängigkeit eine Auslenkungsrichtung zu berechnen, in der der Taster (41) beim Antasten der Oberfläche (51) ausgelenkt wird, während er die Antastkraft auf das Werkstück (52) ausübt, und den Taster (41) zunächst senkrecht zur Oberfläche (51) an die Oberfläche (51) heran zu bewegen und danach den Taster (41) in einer Richtung, die der Auslenkungsrichtung entgegengesetzt ist, bis zu der Oberfläche (51) zu bewegen oder - wenn der Taster (41) bereits senkrecht bis zu der Oberfläche (51) heran bewegt wurde - den Taster (41) in der Auslenkungsrichtung auszulenken, und/oder
     - aus der Auslenkung unter Berücksichtigung einer richtungsabhängigen Nachgiebigkeit des Tasters (11) die Antastkraft zu berechnen und als Steuer- bzw. Regelgröße zu verwenden.

**10.** Koordinatenmessgerät nach dem vorhergehenden Anspruch, wobei die Steuerung ausgestaltet ist, für den Punkt der Oberfläche des Werkstücks (52) unter Berücksichtigung einer Richtungsabhängigkeit einer Nachgiebigkeit des Tasters (11) und/oder des Tastkopfes eine Ausrichtung und/oder Position des Werkstücks (52) und des Tasters (11) relativ zueinander zu berechnen und eine Bewegungseinrichtung zum Bewegen des Werkstücks (52) und/oder zum Bewegen des Tasters (11) anzusteuern, sodass die Ausrichtung und/oder Position beim Antasten eingehalten wird.

**11.** Koordinatenmessgerät nach einem der beiden vorhergehenden Ansprüche, wobei die Steuerung ausgestaltet ist,

• für den Punkt (53) der Oberfläche (51) des Werkstücks (52) unter Berücksichtigung einer Richtungsabhängigkeit einer Nachgiebigkeit des Tasters (11) eine Antastrichtung zu berechnen, in der der Taster (11) beim Antasten der Oberfläche (51) die Antastkraft auf das Werkstück (52) ausüben soll,
• den Taster (11) zunächst senkrecht zur Oberfläche (51) an die Oberfläche (51) heran zu bewegen und danach
• den Taster (11) in der Antastrichtung bis zu der Oberfläche (51) zu bewegen und/oder den Taster (11) die Antastkraft auf die Oberfläche (51) ausüben zu lassen.

## Claims

**1.** Method for measuring a workpiece (52), wherein

- at least one point (53) on a surface (51) of the workpiece (52) is probed by a probe (11), wherein the probe (11) exerts a probe force on the surface (51) and the probe (11) is deflected relative to an attachment of the probe (11),
- a position of the point (53) on the surface (51) is determined on the basis of the deflection, **characterized in that**
- a directional dependence of a resilience of the probe (11) is ascertained and/or is known,
- the probe (11) and the workpiece (52) are positioned and/or aligned relative to one another, taking account of the directional dependence, in such a way that, when probing the point (53) on the surface (51), the probe (11) does not inadvertently slip on the surface (51) or there is a low probability of this happening or there is no inadvertent deviation of the probe (11) from an intended path on the surface (51) or there is a low probability of this happening.

**2.** Method according to the preceding claim, wherein the workpiece (52) is rotated taking account of the directional dependence.

**3.** Method according to either of the preceding claims, wherein the probe (11) is rotated about at least one axis of rotation taking account of the directional dependence.

**4.** Method according to any one of the preceding claims, wherein a controller of a coordinate measuring machine, on which the probe (11) is mounted, calculates an alignment and/or position of the workpiece (52) and of the probe (11) relative to one another for the point on the surface (51) of the workpiece (52) taking account of the directional dependence of the resilience and drives a movement device for moving the workpiece (52) and/or for moving the probe (11) such that the alignment and/or position is maintained while probing.

**5.** Method according to any one of the preceding claims, wherein the directional dependence of the resilience is described at least by values which correspond to the major axes of an ellipsoid, wherein the workpiece (52) and the probe (11) are aligned relative to one another in such a way that the probe force does not coincide with the direction of that major axis which corresponds to the lowest resilience value.

**6.** Method for measuring a workpiece (52), wherein

- at least one point on a surface (51) of the workpiece (52) is probed by a probe (41), wherein the probe (41) exerts a probe force on the surface (51) and the probe (41) is deflected relative to an attachment of the probe (41),
- a position of the point on the surface (51) is determined on the basis of the deflection, **characterized in that**
- a directional dependence of a resilience of the probe (41) is ascertained and/or is known,
- the directional dependence is used to calculate a deflection direction in which the probe (41) is deflected when probing the surface (51) while it exerts the probe force on the workpiece (52),
- the probe (41) is firstly moved toward the surface (51) at right angles to the surface (51) and then
- the probe (41) is moved to the surface (51) in an opposite direction to the deflection direction, or

- if the probe (41) has already been moved at right angles up to the surface (51) - the probe (41) is deflected in the deflection direction.

**7.** Method according to the preceding claim, wherein the deflection direction is calculated in such a way that the probe force is at right angles to the surface (51).

**8.** Method for measuring a workpiece (52), wherein

- at least one point (53) on a surface (51) of the workpiece (52) is probed by a probe (11), wherein the probe (11) exerts a probe force on the surface (51) and the probe (11) is deflected relative to an attachment of the probe (11),
- a position of the point (53) on the surface (51) is determined on the basis of the deflection, **characterized in that** the probe force is calculated from the deflection, taking account of a direction-dependent resilience of the probe (11), and is used as an open-loop or closed-loop control variable.

**9.** Coordinate measuring machine comprising a probe (11) for probing at least one point (53) on a surface (51) of a workpiece (52), wherein the coordinate measuring machine is designed in such a way that the probe (11) exerts a probe force on the surface (51) when probing and the probe (11) is deflected relative to an attachment of the probe (11), and wherein the coordinate measuring machine has a controller, wherein the controller is embodied to control the method for measuring a workpiece (52) according to any one of Claims 1 to 8, specifically to ascertain and/or use a directional dependence of a resilience of the probe (11), and

- to position and/or align the probe and the workpiece (52) relative to one another, taking account of the directional dependence, in such a way that, when probing the point (53) on the surface (51), the probe (11) does not inadvertently slip on the surface (51) or there is a low probability of this happening or there is no inadvertent deviation of the probe (11) from an intended path on the surface (51) or there is a low probability of this happening, and/or
- to calculate, using the directional dependence, a deflection direction in which the probe (41) is deflected when probing the surface (51) while it exerts the probe force on the workpiece (52), and to firstly move the probe (41) toward the surface (51) at right angles to the surface (51) and then move the probe (41) to the surface (51) in an opposite direction to the deflection direction, or - if the probe (41) has already been moved at right angles up to the surface (51) - to deflect the probe (41) in the deflection direction, and/or
- to calculate the probe force from the deflection, taking account of a direction-dependent resilience of the probe (11), and to use this as an open-loop or closed-loop control variable.

**10.** Coordinate measuring machine according to the preceding claim, wherein the controller is designed to calculate an alignment and/or position of the workpiece (52) and of the probe (11) relative to one another for the point on the surface of the workpiece (52) taking account of a directional dependence of a resilience and to drive a movement device for moving the workpiece (52) and/or for moving the probe (11) such that the alignment and/or position is maintained while probing.

**11.** Coordinate measuring machine according to either of the two preceding claims, wherein the controller is configured

• to calculate a probe direction, in which the probe (11) should exert the probe force on the workpiece (52) when probing the surface (51), for the point (53) on the surface (51) of the workpiece (52) taking account of a directional dependence of a resilience of the probe (11),
• to firstly move the probe (11) toward the surface (51) at right angles to the surface (51) and then
• to move the probe (11) in the probe direction up to the surface (51) and/or to let the probe (11) exert the probe force on the surface (51).

**Revendications**

**1.** Procédé de mesure d'une pièce ouvrée (52),

- au moins un point (53) d'une surface (51) de la pièce ouvrée (52) étant palpé par un palpeur (11), le palpeur (11) exerçant une force de palpage sur la surface (51) et le palpeur (11) étant dévié par rapport à une fixation du palpeur (11),
- une position du point (53) de la surface (51) étant déterminée sur la base de la déviation, **caractérisé en ce que**
- une dépendance à la direction d'une flexibilité du palpeur (11) est identifiée et/ou connue,
- le palpeur (11) et la pièce ouvrée (52) sont positionnés et/ou orientés l'un par rapport à l'autre en tenant compte de la dépendance à la direction de telle sorte que lors du palpage du point (53) de la surface (51), il ne se produit pas ou seulement avec une faible probabilité un glissement involontaire du palpeur (11) contre la surface (51) ou il ne se produit pas ou seulement avec une faible probabilité une déviation involontaire du palpeur (11) d'une course prévue sur la surface (51).

2. Procédé selon la revendication précédente, la pièce ouvrée (52) étant tournée en tenant compte de la dépendance à la direction.

3. Procédé selon l'une des revendications précédentes, le palpeur (11) étant tourné autour d'au moins un axe de rotation en tenant compte de la dépendance à la direction.

4. Procédé selon l'une des revendications précédentes, une commande d'un système de mesure de coordonnées sur lequel est monté le palpeur (11) calculant une orientation et/ou une position de la pièce ouvrée (52) et du palpeur (11) l'un par rapport à l'autre en tenant compte de la dépendance à la direction de la flexibilité pour un point de la surface (51) de la pièce ouvrée (52) et commandant un dispositif de déplacement en vue de déplacer la pièce ouvrée (52) et/ou en vue de déplacer le palpeur (11) de manière à ce que l'orientation et/ou la position soit maintenue lors du palpage.

5. Procédé selon l'une des revendications précédentes, la dépendance à la direction de la flexibilité étant décrite au moins par des valeurs qui correspondent aux axes principaux d'un ellipsoïde, la pièce ouvrée (52) et le palpeur (11) étant orientés l'un par rapport à l'autre de telle sorte que la force de palpage ne coïncide pas avec la direction de l'axe principal qui correspond à la valeur de flexibilité la plus faible.

6. Procédé de mesure d'une pièce ouvrée (52),

- au moins un point d'une surface (51) de la pièce ouvrée (52) étant palpé par un palpeur (41), le palpeur (41) exerçant une force de palpage sur la surface (51) et le palpeur (41) étant dévié par rapport à une fixation du palpeur (41),
- une position du point de la surface (51) étant déterminée sur la base de la déviation, **caractérisé en ce que**
- une dépendance à la direction d'une flexibilité du palpeur (41) est identifiée et/ou connue,
- une direction de déviation, dans laquelle le palpeur (41) est dévié lors du palpage de la surface (51) pendant qu'il exerce la force de palpage sur la pièce ouvrée (52), est calculée en utilisant la dépendance à la direction,
- le palpeur (41) est tout d'abord approché de la surface (51) perpendiculairement à la surface (51) et ensuite
- le palpeur (41) est déplacé jusqu'à la surface (51) dans une direction qui est à l'opposé de la direction de déviation ou

- lorsque le palpeur (41) a déjà été approché perpendiculairement jusqu'à la surface (51), le palpeur (41) est dévié dans la direction de déviation.

7. Procédé selon la revendication précédente, la direction de déviation étant calculée de telle sorte que la force de palpage est perpendiculaire à la surface (51).

8. Procédé de mesure d'une pièce ouvrée (52),

- au moins un point (53) d'une surface (51) de la pièce ouvrée (52) étant palpé par un palpeur (11), le palpeur (11) exerçant une force de palpage sur la surface (51) et le palpeur (11) étant dévié par rapport à une fixation du palpeur (11),
- une position du point (53) de la surface (51) étant déterminée sur la base de la déviation, **caractérisé en ce que** la force de palpage est calculée à partir de la déviation en tenant compte d'une flexibilité dépendante de la direction du palpeur (11) et utilisée comme grandeur de commande ou de régulation.

9. Appareil de mesure de coordonnées comprenant un palpeur (11) destiné à palper au moins un point (53) d'une surface (51) d'une pièce ouvrée (52), l'appareil de mesure de coordonnées étant configuré de telle sorte que le palpeur (11) exerce une force de palpage sur la surface (51) lors du palpage et le palpeur (11) étant dévié par rapport à une fixation du palpeur (11), et l'appareil de mesure de coordonnées possédant une commande, la commande étant configurée pour commander le procédé de mesure d'une pièce ouvrée (52) selon l'une des revendications 1 à 8, à savoir pour identifier et/ou utiliser une dépendance à la direction d'une flexibilité du palpeur (11) et

- positionner et/ou orienter le palpeur et la pièce ouvrée (52) l'un par rapport à l'autre en tenant compte de la dépendance à la direction de telle sorte que lors du palpage du point (53) de la surface (51), il ne se produit pas ou seulement avec une faible probabilité un glissement involontaire du palpeur (11) contre la surface (51) ou il ne se produit pas ou seulement avec une faible probabilité une déviation involontaire du palpeur (11) d'une course prévue sur la surface (51), et/ou
- pour calculer une direction de déviation en utilisant la dépendance à la direction, dans laquelle le palpeur (41) est dévié lors du palpage de la surface (51) pendant qu'il exerce la force de palpage sur la pièce ouvrée (52), et approcher tout d'abord le palpeur (41) de la surface (51) perpendiculairement à la surface (51) et ensuite déplacer le palpeur (41) jusqu'à la surface (51) dans une direction qui est à l'opposé de la direction de déviation ou, lorsque le palpeur (41) a déjà été approché perpendiculairement jusqu'à la surface (51), dévier le palpeur (41) dans la direction de déviation, et/ou
- calculer la force de palpage à partir de la déviation en tenant compte d'une flexibilité dépendante de la direction du palpeur (11) et l'utiliser comme grandeur de commande ou de régulation.

10. Appareil de mesure de coordonnées selon la revendication précédente, la commande étant configurée pour calculer une orientation et/ou une position de la pièce ouvrée (52) et du palpeur (11) l'un par rapport à l'autre en tenant compte d'une dépendance à la direction de la flexibilité du palpeur (11) et/ou de la tête de palpage pour un point de la surface de la pièce ouvrée (52) et commander un dispositif de déplacement en vue de déplacer la pièce ouvrée (52) et/ou en vue de déplacer le palpeur (11) de telle sorte que l'orientation et/ou la position soit maintenue lors du palpage.

11. Appareil de mesure de coordonnées selon l'une des deux revendications précédentes, la commande étant configurée pour

• calculer, pour le point (53) de la surface (51) de la pièce ouvrée (52) en tenant compte d'une dépendance à la direction de la flexibilité du palpeur (11), une direction de palpage dans laquelle le palpeur (11) doit exercer la force de palpage sur la pièce ouvrée (52) lors du palpage de la surface (51),
• approcher tout d'abord le palpeur (11) de la surface (51) perpendiculairement à la surface (51) et ensuite
• déplacer le palpeur (11) dans la direction de palpage jusqu'à la surface (51) et/ou laisser le palpeur (11) exercer la force de palpage sur la surface (51).

Fig. 1

Fig.2

Fig. 3

31 37

38c

38b

38a

35

33

Fig.4

Fig.5

Fig.6

EP 2 331 907 B1

Fig. 7

26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5966681 A

- WO 2004106854 A1

**In der Beschreibung aufgeführte Nicht-Patentliteratur**

- **WERNER LOTZE.** Messende Taster mit mehreren Freiheitsgraden. *TR Technische Rundschau, Heft 29/30,* 1993, 20-25

- *Microtechnic,* 1993, vol. 4, 4-10
- *TR Technische Rundschau, Heft 29/30,* 1993, 20-25